# EUROPEAN PATENT SPECIFICATION

(11) **EP 4 295 537 B1**
(45) Date of publication and mention of the grant of the patent: **13.11.2024**
(21) Application number: 22711173.9
(22) Date of filing: 18.02.2022
(51) Int. Cl.: H04L 9/40, H04L 67/1097, H04L 67/12, H04W 12/61, H04W 12/084, H04W 12/04, H04W 12/03, H04W 12/00, H04W 4/38, H04W 84/18

(54) **METHODS AND SYSTEMS FOR CONTROLLING ACCESS TO SENSOR DATA**
VERFAHREN UND SYSTEME ZUR STEUERUNG DES ZUGANGS AUF SENSORDATEN
PROCÉDÉS ET SYSTÈMES DE CONTRÔLE D'ACCÈS À DES DONNÉES DE CAPTEUR

(30) Priority: 19.02.2021 EP 21158265
(43) Date of publication of application: 27.12.2023
(73) Proprietor: Nagravision Sàrl, 1033 Cheseaux-sur-Lausanne (CH)
(72) Inventor: GREMAUD, Fabien, 1033 Cheseaux-sur-Lausanne (CH)
(74) Representative: Mewburn Ellis LLP
(86) International application number: PCT/EP2022/054149
(87) International publication number: WO 2022/175490

(56) References cited:
- US-A1- 2017 103 216
- ANGEL CUEVAS ET AL: "Security Patterns for Capturing Encryption-Based Access Control to Sensor Data", EMERGING SECURITY INFORMATION, SYSTEMS AND TECHNOLOGIES, 2008. SECURWARE '08. SECOND INTERNATIONAL CONFERENCE ON, IEEE, PISCATAWAY, NJ, USA, 25 August 2008 (2008-08-25), pages 62 - 67, XP031319470, ISBN: 978-0-7695-3329-2

## Description

### TECHNICAL FIELD OF THE INVENTION

The present invention relates to controlling access to sensor data. More specifically, it relates to methods and systems which rely on local key-based encryption at a sensor, and the use of an authorization token to ensure that a device is only able to access data to which it is permitted access. Various aspects of the invention relate to different parts of the system, and the methods performed by those different parts.

### BACKGROUND TO THE INVENTION

Sensors are ubiquitous in everyday life, and are essential for the functioning and maintenance of almost every device that we see and use. There is a need to ensure that data obtained by a given sensor cannot be accessed or modified by any other device. For example, it may be desirable that data collected by a sensor which detects wear and tear in industrial machinery only be accessible by devices belonging to engineers charged with maintenance of those machines. Similarly, it is also important to ensure that the sensor data cannot be manipulated, except by authorized parties. Conventionally, the access permissions of a device have been controlled by a security platform. However, with the advent of edge computing, in which data processing takes place at devices on the nodes of a network, rather than being performed centrally, the edge devices may be separated significantly from the security platform, by a so-called "air gap". In these cases, there may not be a secure connection or secure network between the edge device and the security platform. There is therefore a need for a system in which access to sensor data by a device can be securely controlled, even when the device and the sensor are remote from the security platform which controls the access permissions. This need is addressed by the invention to which the present application is directed.

US 2017/103216 A1 describes methods and systems for security and data privacy of lighting sensory networks. "Security Patterns for Capturing Encryption-Based Access Control to Sensor Data" by Cuevas et al. (2008) describes a generic solution to ensure end-to-end access control for data generated by wireless sensors and consumed by business applications, based on a new approach for encryption-based access control.

### SUMMARY OF THE INVENTION

In general terms, the present invention provides a system in which access control data, included on e.g. an authorization token which may be generated by a remote security platform is deployed on a device such as an edge device, the access control data e.g. on the authorization token defining the sensor data which the device has access to, and operations which the device is permitted to execute on that sensor data. A sensor generates sensor data, protects it, and then transmits it to the device for storage. So, even though the sensor data is stored on the device - the device may be unable to make use of it, because it is protected. If the device wishes to access the sensor data, it may send a request to the sensor, along with the access control data on e.g. the authorization token. The sensor then enables the device to execute only certain permitted operations, for example by returning to the device, keys which are usable only to execute the permitted operations. By deploying the authorization token on the device, there is no need for the device to have a physical connection with the security platform. And, because the data stored on the device is protected, and can only be accessed with the correct permissions, data security is not compromised. It will be noted that there are numerous components to this invention, each of which contributes to the technical advantages achieved. Accordingly, there are numerous aspects of the present invention.

One aspect of the invention provides a method of controlling access to sensor data, as set out in claim 1.

Herein, the sensor data may be protected using a secret key, such as an encryption key.

Specifically, enabling the device to execute the permitted operation may comprise transmitting, to the device, a signal comprising one or more keys, or data encoding one or more keys, the one or more keys usable by the device to execute the permitted operation on the protected sensor data. Another aspect of the invention provides a sensor as set out in claim 15.

There are two important ways in which access to the sensor data may be controlled: firstly, depending on the permitted operation, different keys may be provided to the device. Alternatively, or additionally, the sensor data may include a plurality of subsets (which may be distinct) of sensor data, each individually protected. In that case, the sensor may provide the device only with keys which are usable to access permitted subsets of the sensor data.

Another complementary aspect of the invention is a method which is performed by the device, rather than the sensor, specifically a method of accessing protected sensor data by a device, as set out in claim 10.

A further aspect of the invention provides a device as set out in claim 16.

Implementations of the present invention enable increased amounts of processing and computation to performed at "the edge" with reduced risk of interference by malicious actors. As a result, the invention may advantageously be applied to various use cases, such as smart vehicles and smart buildings. In the context of the present invention, the term "smart" is may be used generally to refer to areas of technology in which data is collected by sensors throughout e.g. the vehicle or the building, and the data is used to inform control processes relating to the vehicle or the building. With the advent of the so-called "internet of things", an increased amount of computation and processing is performed at the sensors themselves as well. According to a further aspect of the invention, there is provided a building comprising a plurality of sensors interconnected by a network, wherein at least one sensor of the plurality of sensors is a sensor according to a previous aspect of the present invention. Preferably, each sensor of the plurality of sensors is a sensor according to a previous aspect of the invention. Equivalent aspects of the invention provide a vehicle rather than a building.

The sensors according to all aspects of the invention may include any or all of the following: cameras, proximity sensors, CO₂ sensors, smoke sensors, pressure sensors, humidity sensors, accelerometers, position sensors, motion sensors, LiDAR-based sensors, temperature sensors, force sensors, vibration sensors, piezoelectric sensors, fluid property sensors, photo-optic sensors, light intensity sensors. It will be appreciated, however, that this is a non-exhaustive list, and the invention is in no way limited to these types of sensors.

In the context of vehicles, the "sensors" of the invention may be configured to sense specific conditions within the vehicle.

Then, the data may be protected to ensure that only authorized maintenance personnel are able to access the sensor data in order to inform maintenance decisions. Specific types of sensor data or other information which could be obtained in the context of smart vehicles or vehicles more generally include the following:
- Information about the identity of the vehicle (which could be encoded in or obtained from a code or other identifier such as a QR code, where the sensor may be the device which is used to obtain the identity information from the code or other identifier). This could be applicable to e.g. automatic number plate recognition systems. Similarly, there could also be information about the identity of the passenger or driver of the vehicle which could be obtained from e.g. image sensors, or by scanning a code, as for the identity of the vehicle.
- Information which may be useful for navigation, e.g. the position of the vehicle, a vector indicating the movement of the vehicle, as well as a change in the vector which may be indicative of a change in direction of the vehicle or an acceleration or deceleration of the vehicle. This may be sensed by a GPS tracker (or other satellite navigation system) which is located in the car. In this case, it may be particularly important to protect the sensor data, for the sake of the privacy of the vehicle owner. Since such information is often used by insurance companies, and by law enforcement, it is also very important that any attempt at tampering with the obtained data is either preventable or detectable. Similarly, the sensor data may include vehicle mileage, or an amount of time for which the vehicle has been used.
- Sensors may be configured to detect when various components of the vehicle require maintenance, or are damaged. This information is of particular relevance to maintenance personnel. Similarly, sensors may detect consumption of e.g. oil, fuel, battery power within the vehicle. Detection of battery power is particularly important in the context of electric vehicles.
- There may be environmental sensors within the vehicle, of the kind listed previously.

The commercial contexts in which sensors obtaining this kind of information might be particularly useful include: insurance, fleet management, commerce/transactions, vehicle health/maintenance, vehicle-to-vehicle communications, autonomous vehicles, smart parking, traffic management.

Similar considerations apply to buildings including sensors: it is important to ensure that sensor data is only accessible by authorized maintenance personnel.

The invention includes the combination of the aspects and preferred features described except where such a combination is clearly impermissible or expressly avoided.

### BRIEF DESCRIPTION OF THE DRAWINGS

Embodiments of the invention will now be described with reference to the following drawings in which:
- Fig. 1 shows a system including a sensor 10 and a device 20.
- Fig. 2 shows an example of a method which may be performed by the sensor 10.
- Fig. 3 shows an example of a method which may be performed by the device 20.
- Fig. 4 shows an alternative example of a sensor 100.
- Fig. 5 shows an alternative example of a device 200.
- Fig. 6 illustrates how the sensor data may be divided into subsets.
- Fig. 7 illustrates a process for retrieving or generating an encryption key for a given piece of data.
- Figs. 8A and 8B illustrate the layouts of two example encryption key data tables.
- Fig. 9 illustrates a method of encryption key generation.
- Fig. 10 illustrates an authentication method.
- Fig. 11 illustrates a system including sensors, devices and an operating component.

### DETAILED DESCRIPTION OF THE DRAWINGS

Aspects and embodiments of the present invention will now be discussed with reference to the accompanying figures. Further aspects and embodiments will be apparent to those skilled in the art. All documents mentioned in this text are incorporated herein by reference.

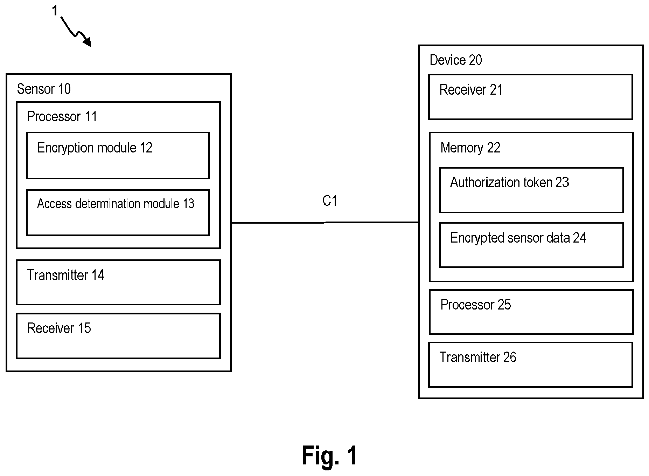

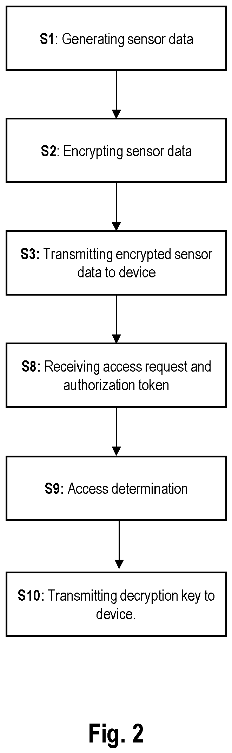

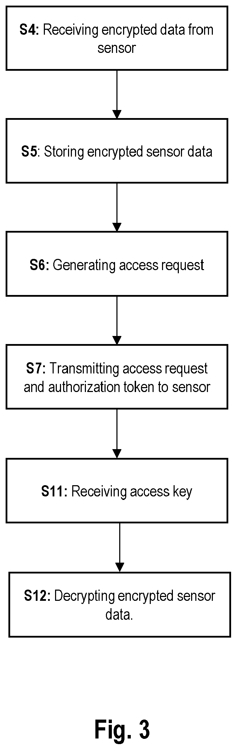

The present invention relates to various methods and devices. In particular, the invention relates to a method performed by a sensor, a method performed by a device such as an edge device or a server, and a method performed by a system including the two. The invention also relates to the sensor, the device, and the system themselves. Fig. 1 shows a system 1 including a sensor 10 and a device 20. Figs. 2 and 3 show, respectively, a specific example of a method according to the present invention that may be performed by the sensor 10 and the device 20.

As discussed, the system 1 of Fig. 1 includes a sensor 10 and a device 20. The sensor 10 and the device 20 are connected via a connection C. The connection C may be any form of connection which is able to convey data and/or information between the two. Preferably, the connection C is an electrical connection, and may be a wired connection or a wireless connection, such as a connection via a wireless network, such as a Wi-Fi or cellular network. Alternatively, the wireless connection may be in the form of a Bluetooth connection or a near-field communication connection. It will be understood that connection C could take a number of different forms which need not be explicitly set out here.

The sensor 10 includes a processor 11, which includes an encryption module 12 and an access determination module 13. Both with reference to Fig. 1, and to the rest of the application, it should be noted that the term "module" refers to any functional unit configured to perform a given function. The module may be implemented either with dedicated, adapted, or modified hardware, or may alternatively be implemented in the form of a software module, e.g. in the form of a section of code.

The sensor 10 further includes a transmitter 14 and a receiver 15. Here, the terms "transmitter" is used broadly to cover any component which is capable of transmitting data, or effecting the transmission of data. For example, the transmitter 14 may be configured to generate and send a wireless signal, the wireless signal encoding the data. Alternatively, the transmitter 14 may be configured to effect the transmission of data via a wired connection, such as the connection C. The term "receiver" should be treated similarly broadly as any component which is capable of receiving data. For example, the receiver 15 may be configured to receive a wireless signal, or may be configured to receive data via a wired connection, such as the connection C. The functions of the sensor 10, processor 11, encryption module 12, access determination module 13, transmitter 14, and receiver 15 are described in more detail later in this application, with reference to Figs. 2 and 3.

The device 20 includes a receiver 21, a memory 22, a processor 25 and a transmitter 26. The terms "transmitter" and "receiver" should be interpreted as set out in the previous paragraph. The memory 22 of the device 20 includes, or has stored thereon an authorization token 23, and encrypted sensor data 24. The nature of these will be described later.

Before describing specific embodiments of the invention, we first set out optional features of the first aspect of the invention and the second aspect of the invention in general terms. Although reference numerals are used in the disclosure below, it should be noted that it is explicitly envisaged that the method may be implemented using a system other than the system shown in Fig. 1.

As discussed previously, the first aspect of the invention provides a method of controlling access to sensor data, the method including the steps of generating sensor data, and protecting the sensor data using one or more secret keys, to generate protected sensor data 24; and transmitting the protected sensor data 24 to a device 20 for storage; receiving, by the sensor 10: an authorization token 23 including access control data defining one or more operations which the device 20 is permitted to execute on the protected sensor data 24; determining by the sensor 10, based on the access control data, an operation which the device 20 is permitted to execute on the protected sensor data 24; providing, to the device 20, one or more keys usable by the device 20 to execute the permitted operation on the protected sensor data 24. In preferred cases, in order to reduce the storage requirements of the sensor 10 (specifically, a memory thereof), the method may further include a step of deleting the sensor data after the step of transmitting it to the device 20. At the heart of the invention is the idea that the sensor 10 will provide to the device 20 only the key or keys which are usable by the device 10 to execute operations which it is permitted to execute, based on the access control data in the authorization token 23. The permitted operations, and the nature of the keys associated therewith will be discussed in more detail later on, but before that, we describe a general case, in which various keys may be applied during the generation of the protected sensor data, and combinations of those keys are usable to execute various operations on the protected sensor data. It should be noted that the various keys may be applied one after the other, in a "stacked" manner.

In some cases, protecting the sensor data includes applying a first secret key to the sensor data, to generate first protected sensor data. Then, if the access control data defines that the device is permitted to execute a first operation on the first protected sensor data, the step of providing may include providing, to the device, a first complementary key, usable by the device to execute the first operation. Here, the first operation may be complementary to the application of the first secret key to the sensor data, e.g. encryption/decryption (this specific example is discussed in some detail later on in the application). Herein, the term "complementary" should be understand to mean that the key is able to perform the complementary action to the secret key. For example, if the secret key is an encryption key, the complementary key may be the corresponding decryption key. If the secret key is used to generate an authentication code, then the complementary key may be the same as the secret key, thereby enabling the device to generate the same authentication code, in order to authenticate the protected sensor data. It is important to note that the complementary key may be the same as the secret key.

In a preferred case, the first secret key is an encryption key, and the first protected sensor data is encrypted sensor data. The first operation may then be a decryption or reading operation. In that case, the step of providing may include providing a complementary key in the form of a decryption key to the device. In some embodiments, the encryption key may be a symmetric encryption key, in which case the encryption key and the decryption key may be the same. In this example, the sensor encrypts the sensor data and the device can only receive the key to decrypt it if the access control data specifies that it is permitted.

In other cases, protecting the sensor data may include applying a second secret key to the first protected sensor data, to generate second protected sensor data. Then, two possible outcomes are possible:
1. If the access control data defines that the device is permitted to execute a second action on the second protected data, the step of providing may include providing, to the device, a second complementary key, usable by the device to execute the second operation on the second protected sensor data. Here, the second operation may be complementary to the application of the second secret key to the first protected sensor data, as described above.
2. If the access control data defines that the device is permitted to execute **either** both the first and second operation, **or** a third operation (which may, optionally, be a combination of the first and second operation, or require that both be executed in order to execute it), then the step of providing may include: providing, to the device, the first complementary key and the second complementary key, the first complementary key and the second complementary key usable in combination to execute the third operation on the second protected sensor data. Or, the step of providing may include: providing, to the device, the first complementary key and the second complementary key, the second complementary key usable by the device to execute the second operation on the second protected sensor data to retrieve the first protected sensor data, and then the first complementary key usable by the device to execute the first operation on the first protected sensor data.

Below, we describe two example scenarios in which two keys may be used.

The first is where the sensor data first has an authentication key applied to it, to generate an authentication code. Then, an encryption key is applied to the combination of the sensor data and the authentication code, to generate encrypted sensor data. In this case, the first secret key is the authentication key; the first protected data is the combination of the sensor data and the authentication code; the second secret key is the encryption key; and the second protected sensor data is the encrypted sensor data. Then, consider cases 1 and 2 referred to above:
1. The second operation may be decryption. In other words, if the access control data defines that the device is permitted to decrypt the encrypted sensor data, the step of providing may include providing to the device, a decryption key (complementary to the encryption key) usable by the device to decrypt the encrypted sensor data. In the case that a symmetric encryption key is used, the encryption key and the decryption key may be identical.
2. The first operation may be authentication, and the second operation may (still) be decryption. Alternatively put, the third operation may comprise, for example, modifying the sensor data, specifically modification of the sensor data in a way that can be authenticated. In order for the device to modify the sensor data, it must be able first to decrypt it, at which point it will be able to modify it. If an unauthorized device does this, then it will be detectable, because (without the authentication key), such a device will not be able to generate an authentication code corresponding to the modified sensor data. So, authorized devices must be able to both decrypt the sensor data (i.e. to read it), and also, after modifying it, to re-authenticate it so that the modified sensor data can be authenticated. **Accordingly,** if the access control data defines that the device is permitted to decrypt and re-authenticate the encrypted sensor data, or to modify the sensor data, the step of providing may include:
   a. providing, to the device, the first authentication key and the decryption key, the first authentication key and the encryption key usable in combination to modify the sensor data; or
   b. providing, to the device, the first authentication key and the decryption key, the decryption key usable by the device to decrypt the encrypted sensor data, to retrieve the combination of the sensor data and the authentication code, thereby enabling the device to modify the sensor data, to generate modified sensor data, and the first authentication key usable by the device on the modified sensor data to generate a second authentication code. In some cases, as discussed, the encryption key is symmetric and therefore identical to the decryption key. In such cases, the device may then use the key to re-encrypt the combination of the modified sensor data and the second authentication code to generate modified encrypted sensor data for storage on e.g. a memory of the device.

In a second example, the first secret key may be an encryption key, and the first protected sensor data may be encrypted sensor data. Then, the second secret key may be a second authentication key (unrelated to the first authentication key which formed part of the previous example), and the second protected sensor data may take the form of an authentication code or, preferably, a combination of the encrypted sensor data and the authentication code. The first operation may be a decryption operation, and the second operation may be an authentication operation. Note that this is opposite from the previous example.

Then:
1. The second operation may be authentication. In that case, if the access control data defines that the device is permitted to authenticate the encrypted sensor data, the step of providing may include: providing, to the device, an authentication key usable by the device to authenticate the encrypted sensor data. The step of authenticating here may include using the authentication key on the encrypted sensor data, to generate an authentication code and comparing the generated authentication code with the authentication code included in the second protected sensor data. If the two are the same, then it may be concluded that the encrypted sensor data has not been tampered with. If the two do not match, then it is possible that the encrypted sensor data has been tampered with in an unauthorized manner.
2. The first operation may be encryption. In that case, if the access control data defines that the device is permitted to decrypt the encrypted sensor data, the step of providing, to the device, a decryption key usable by the device to decrypt the encrypted sensor data, thereby retrieving the sensor data. It should be noted that in this case, the decryption could take place without authentication. However, it is beneficial first to confirm that the encrypted sensor data is authentic. Accordingly, if the access control data defines that the device is permitted both to authenticate and decrypt the encrypted sensor data, it is preferable that device executes the authentication step before the decryption step.

The above examples only require (explicitly) the application of a first secret key and a second secret key. However, it will be appreciated that the method may be generalized to the application of a general plurality of secret keys. In such cases, protecting the sensor data may include applying, a plurality of secret keys to the sensor data to generate the protected sensor data. Then, the step of providing may include providing, to the device, a plurality of complementary keys, each complementary to a respective secret key of the plurality of secret keys, a combination of the plurality of complementary keys usable by the device to execute the permitted operation.

In a case which is an extension of the specific example discussed above, three keys are used:
1. The first secret key is a first authentication key.
2. The second secret key is an encryption key.
3. The third secret key is a second authentication key.

In this case, protecting the sensor data includes the following steps: applying the first authentication key to generate first protected sensor data including the sensor data and a first authentication code; applying the encryption key to the first protected sensor data to generate second protected sensor data in the form of encrypted sensor data (which is an encryption of both the sensor data and the first authentication code); and applying the second authentication key of the second protected sensor data to generate third protected sensor data including the encrypted sensor data and a second authentication code.

This example effectively combines the two examples set out above. In this case:
1. The first operation is authentication of the sensor data.
2. The second operation is a decryption operation.
3. The third operation is authentication of the encrypted sensor data.

If the access control data defines that the device is permitted to authenticate the encrypted sensor data, the step of providing may include: providing, to the device, the second authentication key usable by the device to authenticate the encrypted sensor data.

If the access control data defines that the device is permitted to decrypt the encrypted sensor data, the step of providing may include providing to the device, a decryption key (complementary to the encryption key) usable by the device to decrypt the encrypted sensor data. In the case that a symmetric encryption key is used, the encryption key and the decryption key may be identical. In the event that the access control data defines that the device is permitted to authenticate and decrypt the encrypted sensor data, then both keys may be provided, to enable the device to execute both operations.

If the access control data defines that the device is permitted to decrypt and re-authenticate the encrypted sensor data, or to modify the sensor data, the step of providing may include:
providing, to the device, the first authentication key and the decryption key, the first authentication key and the encryption key usable in combination to modify the sensor data; or
providing, to the device, the first authentication key and the decryption key, the decryption key usable by the device to decrypt the encrypted sensor data, to retrieve the combination of the sensor data and the first authentication code, thereby enabling the device to modify the sensor data, to generate modified sensor data, and the first authentication key usable by the device on the modified sensor data to generate a third authentication code. In some cases, as discussed, the encryption key is symmetric and therefore identical to the decryption key. In such cases, the device may then use the key to re-encrypt the combination of the modified sensor data and the third authentication code to generate modified encrypted sensor data for storage on e.g. a memory of the device.

It may be the case that the order in which the plurality of secret keys is applied is important, and correspondingly, the order in which the plurality of complementary keys is applied is also important. In these cases (which may or may not form a subset of the previous cases outlined above), protecting the sensor data may include: applying, in succession, N secret keys to the sensor data, to generate *N*^{th} protected sensor data, wherein application of the first key to the sensor data generates first protected sensor data, and, for *k* > 1, applying the *k*^{th} key to the (*k*-1)^{th} protected sensor data generates *k*^{th} protected sensor data, wherein 1 < *k* ≤ *N.* Then, if the access control data defines that the device is permitted to execute a *M*^{th} operation on the *N*^{th} protected sensor data, where 1 ≤ *M* ≤ *N*, the step of providing includes providing, to the device (*N* + 1 - *M*) complementary keys to the subset of keys of the plurality of secret keys for which *M* ≤ *k* ≤ *N*, the *M* keys being usable in succession from the *N*^{th} complementary key to the *M*^{th} complementary key, to execute or facilitate execution of the *M*^{th} operation. Specifically, the device may then apply the plurality of complementary keys on the *N*^{th} protected sensor in succession from *N* to *M,* wherein application of the *k*^{th} complementary key to the *k*^{th} protected sensor data retrieves the *(k* - 1)^{th} protected sensor data for *k* > 1, and wherein application of the first complementary key to the first protected sensor data retrieves the sensor data.

According to certain implementations, the method may further include a step of generating a secret key for each individual piece of data which is generated by the sensor. The generation and storage of the secret keys in this manner is explained in more detail later in this application, in the context of encryption keys. However, it should be noted that that disclosure applies equally well to the case of a generic secret key used to protect the sensor data.

In some cases, the device may be permitted to execute different operations on different subsets of the data. For example, a given device may be able to modify and re-authenticate one subset of the data, but only to decrypt another subset. Such permissions are preferably defined in the access control data included in the authorization token. Specifically, the sensor data may include a first subset of sensor data, and a second subset of sensor data. Accordingly, generating the protected sensor data may include: protecting the first subset of sensor data to generate a first subset of protected sensor data, and protecting the second subset of sensor data to generate a second subset of protected sensor data. The way in which the sensor data may be divided into subsets is set out in detail later in this application. As before, generating the first subset of protected sensor data may include applying a first secret key to the first subset of sensor data, and generating the second subset of protected sensor data may include applying a second secret key to the second subset of sensor data.

In these cases, the access control data may define: a first operation which the device is permitted to execute on the first subset of protected sensor data; and/or a second operation which the device is permitted to execute on the second subset of protected sensor data.

Then, the step of determining may include determining, based on the access control data: a first operation which the device is permitted to execute on the first subset of protected sensor data; and/or a second operation which the device is permitted to execute on the second subset of protected sensor data. The device may not be permitted to execute an operation on both the first subset and the second subset. Accordingly, the step of providing may include: only if it is determined that the device is permitted to execute the first operation, providing one or more keys usable by the device to execute the first operation on the first subset the protected sensor data; and only if it is determined that the device is permitted to execute the second operation, providing one or more keys usable by the device to execute the second operation on the second subset of protected sensor data. In other words, the first and second operations cannot be executed unless the access control data dictates that the device is permitted to do so.

In a more general case, the sensor data may include a plurality of subsets of sensor data. The step of encrypting the sensor data may then include protecting each of the plurality of subsets of sensor data with a respective key to generate a respective plurality of subsets of protected sensor data. Accordingly then, the access control data may define one or more operations which the device is permitted to execute on a respective subset of protected sensor data. For example, an operation may be defined for each of the subsets of data, only for one of them, or for some of them. The step of determining may then include determining one or more operations which the device is permitted to execute on a respective subset of protected sensor data. Once this determination has taken place, the method may include a step of providing, to the device, one or more keys, each key usable by the device to execute a permitted operation on a respective subset of the protected sensor data.

In the above examples, it is only specified that the authorization token is received by the sensor. It should be understood that the determining step takes place in response to receiving the authorization token. In the cases above, it should be understood that in response to the step of determining, the sensor provides, to the device, the key or keys which are usable by the device to execute all of the operations which are permitted, based on the access control data. However, in some cases, the device may not wish to execute all possible operations. In such cases, the method may further include a step of receiving an access request from the device, the access request specifying one or more of: the first operation to be executed on the first subset of protected sensor data, and the second operation to be executed on the second subset of protected sensor data. Then, the step of determining may include: determining whether the device is permitted to execute the first operation on the first subset of protected sensor data; and/or determining whether the device is permitted to execute the second operation on the second subset of protected sensor data. Then, as already discussed, the relevant keys will be provided only in the event that a positive determination has taken place.

Above, we have set out implementations in which more than one operation may be executed on the protected sensor data, depending on the permissions of a given device. We have also set out implementations in which a device may perform different operations on different subsets of sensor data. It should be noted that the invention also encompasses implementations in which each of the plurality of subsets of protected sensor data are protected by a plurality of secret keys, and the access control data defines separate operations which may be executed for each subset of protected sensor data. Such an implementation is obtainable by combining the optional features set out above, and should be considered to be explicitly disclosed in this application.

When the sensor 10 receives the authorization token 23, it may perform a step of authenticating the authorization token 23. For example, when it is generated, the authorization token 23 may have been signed using e.g. an elliptic curve digital signature algorithm and a private key. The private key may be on-boarded in a PKI, so it is signed by a certification authority (CA) in the form of certificates. The root CA public key may be hardcoded into the sensor 10, e.g. a sensor secure element thereof, and may then be used to authenticate the authorization token 23. When the device 20 requests access to data, a secure channel may be set up between the sensor 10 and the device 20. In this case, the sensor 10 and/or the device 20 may perform a mutual authentication process, using either e.g. a pre-shared symmetric key, or an asymmetric PKI.

In a preferred implementation of the present invention, the method is used to protect the sensor data at least by encrypting it, thereby generating encrypted sensor data. In such cases, the method includes the steps of generating sensor data, and encrypting the sensor data using an encryption key, to generate encrypted sensor data 24; and transmitting the encrypted sensor data 24 to a device 20 for storage; receiving, by the sensor 10: an authorization token 23 including access control data defining one or more operations which the device 20 is permitted to execute on the encrypted sensor data 24; determining by the sensor 10, based on the access control data, an operation which the device 20 is permitted to execute on the protected sensor data 24; providing, to the device 20, one or more keys usable by the device 20 to execute the permitted operation on the encrypted sensor data 24. Additional optional features of the invention are set out below. It should be noted that the features set out below may represent re-wording of the examples described above. Where compatible, any optional feature of the invention disclosed in this application may be combined with any other feature, without extending beyond the intended scope of this disclosure. In particular, it should be noted that any optional features set out below relating to encryption, or encryption keys may apply equally well for general protection using secret keys or the secret keys themselves, and their complements.

An important aim of the present invention is to ensure that the sensor data remains secure, and can only be read and/or modified by particular, specified, parties. Accordingly, the operations may include decrypting the encrypted sensor data 24, and modifying and re-authenticating the sensor data. In the latter case, it will be appreciated that the encrypted sensor data 24 must first be decrypted before the corresponding (i.e. non-encrypted) sensor data can be modified.

We first consider the case where the access control data defines that the device 20 is permitted to decrypt the encrypted sensor data 24. In this case, the method may include providing, to the device 20, a decryption key usable by the device 20 to decrypt the encrypted sensor data. In other words, because the access control data defines that the device is permitted to decrypt the encrypted sensor data 24, it will be determined (based thereon) that the device is permitted to decrypt the encrypted sensor data 24. In some cases, the encryption key may be a symmetric key, in which case the decryption key may be the same as the encryption key which was used to encrypt the sensor data in the first place.

In other cases, the device 20 may be permitted to go one step further, and to modify the sensor data. It will be noted that any party with the decryption key would be able to decrypt and modify the data. However, it is of vital importance that unauthorized modifications of the data are identifiable so that they may be disregarded. In order to ensure that this is the case, the step of encrypting may include applying a first authentication key to the data before using the encryption key. In this way, if an unauthorized party were to modify the sensor data, and then to re-encrypt it, without the first authentication key, they would be unable to authenticate the data, and it would be straightforward to detect that unauthorized tampering had taken place. Consider now the case where a device 20 is permitted to modify the data. If the access control data that the device 20 is permitted to modify the sensor data, the method may include: providing to the device 20, a decryption key usable to decrypt the encrypted sensor data, thereby outputting the sensor data; and providing to the device 20 the first authentication key, usable by the device 20 to re-authenticate the modified sensor data. The device 20 may thus be configured to decrypt the data, modify it, and reapply the authentication key to authenticate the modified sensor data. The device 20 may then re-encrypt the data.

In some other cases, the operations may include authenticating the encrypted sensor data only. In other words, in some cases, the device 20 may wish to confirm that the encrypted sensor data 24 has not been tampered with between its generation and transmission to and storage on the device. In order to achieve this, the step of encrypting may include applying a second authentication key after to the encrypted sensor data 24. Then, the step of providing may include providing, to the device 20, the second authentication key, usable by the device 20 to authenticate the encrypted sensor data. It should be noted that in cases in which the device 20 is permitted to decrypt and/or modify the sensor data, as described above, the second authentication key may also be provided to the device 20.

It should be noted that in the context of the present application, an authentication key is a key which may be applied to some data (either encrypted or unencrypted) which outputs a message authentication code (MAC). The MAC may then be tagged to the original data (i.e. the "message"). Specifically, applying an authentication key to the data may comprise applying a key-based algorithm to the data, which is an algorithm whose output depends on the input data and the key. In other words, the same result is only obtained if both the input data and the key are the same. A different key will yield a different result. In preferred examples, applying an authentication key to the sensor data (or encrypted sensor data) may comprise using a keyed hash algorithm or HMAC scheme involving an authentication key, on the sensor data (or encrypted sensor data) to generate a HMAC. Other keyed authentication schemes are also envisaged.

It should be noted that any actions described throughout this application in respect of the encryption key may also be performed in respect of the first and/or second authentication keys (particularly those actions relating to generation and/or retrieval of those keys).

In some cases, different operations may be permitted for different subsets of the sensor data. For example, a sensor 10 may obtain two different types of data, and a given device 20 may be permitted only to read one type of data, but to modify the other type. Alternatively, the device 20 may only be permitted to view data which was recorded within a specific time frame. Some implementations of the present invention enable different rules to apply for different subsets of the sensor data. Specifically, the sensor data may include a first subset of sensor data and a second subset of sensor data. Of course, the sensor data may be divided into a general plurality of subsets of sensor data. Here, the division into a first subset and second subset is for illustrative purposes. The general case will be described later.

There are numerous ways in which the sensor data may be divided into subsets. For example, the method may include generating and appending a header to each piece of sensor data generated, the header including metadata containing information about that piece of sensor data, the metadata including one or more of: a timestamp indicating a time and/or date at which the piece of sensor data was collected/generated; a sensor ID identifying the sensor which collected the data; a data type indicating the type of data; and one or more device IDs identifying devices 20 which are permitted to access the data. In such cases, the subset to which each respective piece of sensor data belongs is based on the metadata in the header of that piece of sensor data.

The step of encrypting may include encrypting the first subset of sensor data with a first encryption key to generate a first subset of encrypted sensor data 24; and encrypting the second subset of sensor data with a second encryption key, different from the first encryption key, to generate a second subset of encrypted sensor data 24. In such cases, the access control data may define a first operation which the device 20 is permitted to execute on the first subset of encrypted sensor data 24; and/or a second operation which the device 20 is permitted to execute on the second subset of encrypted sensor data 24. Accordingly, the step of determining may include determining, based on the access control data: a first operation which the device 20 is permitted to execute on the first subset of encrypted sensor data 24; and/or a second operation which the device 20 is permitted to execute on the second subset of encrypted sensor data 24. The device 20 may not be permitted to execute an operation on both the first subset and the second subset. Accordingly, the step of providing may include: only if it is determined that the device 20 is permitted to execute the first operation, providing one or more keys usable by the device 20 to execute the first operation on the first subset the encrypted sensor data 24; and only if it is determined that the device 20 is permitted to execute the second operation, providing one or more keys usable by the device 20 to execute the second operation on the second subset of encrypted sensor data 24. In other words, the first and second operations cannot be executed unless the access control data dictates that the device 20 is permitted to do so.

In a more general case, the sensor data may include a plurality of subsets of sensor data. The step of encrypting the sensor data 24may then include encrypting each of the plurality of subsets of sensor data with a respective key to generate a respective plurality of subsets of encrypted sensor data 24. Accordingly then, the access control data may define one or more operations which the device 20 is permitted to execute on a respective subset of encrypted sensor data 24. For example, an operation may be defined for each of the subsets of data, only for one of them, or for some of them. The step of determining may then include determining one or more operations which the device 20 is permitted to execute on a respective subset of encrypted sensor data 24. Once this determination has taken place, the method may include a step of providing, to the device 20, one or more keys, each key usable by the device 20 to execute a permitted operation on a respective subset of the encrypted sensor data 24.

In the above examples, it is only specified that the authorization token 23 is received by the sensor 10. It should be understood that the determining step takes place in response to receiving the authorization token 23. In the cases above, it should be understood that in response to the step of determining, the sensor 10 provides, to the device 20, the key or keys which are usable by the device 20 to execute all of the operations which are permitted, based on the access control data. However, in some cases, the device 20 may not wish to execute all possible operations. In such cases, the method may further include a step of receiving an access request from the device 20, the access request specifying one or more of: the first operation to be executed on the first subset of encrypted sensor data 24, and the second operation to be executed on the second subset of encrypted sensor data 24. Then, the step of determining may include: determining whether the device 20 is permitted to execute the first operation on the first subset of encrypted sensor data 24; and/or determining whether the device 20 is permitted to execute the second operation on the second subset of encrypted sensor data 24. Then, as already discussed, the relevant keys will be provided only in the event that a positive determination has taken place.

As before, this may be generalized to the case where there are a plurality of subsets of sensor data. In this case, the access request may specify one or more operations to be executed on a respective subset of sensor data, and the step of determining includes determining whether the device 20 is permitted to execute each specified operation on the respective specified subset of encrypted sensor data 24.

The optional features presented above relate primarily to the first aspect of the invention, namely the method executed by the sensor 10. However, it will be appreciated that, where compatible, these features apply equally well to the second aspect of the invention, namely the method executed by the device 20. Below, we set out, in general terms, some additional optional features which may apply to the second aspect of the invention. the second aspect of the invention provides a method of accessing protected sensor data by a device 20, device 20 having stored thereon an authorization token 23 including access control data defining one or more operations which the device 20 is permitted to execute on encrypted sensor data 24, the method including the steps of: receiving encrypted sensor data 24 from a sensor, the encrypted sensor data encrypted using an encryption key; storing the received sensor data; sending the authorization token 23 to the sensor; and receiving a key usable by the device 20 to execute a permitted operation on the encrypted sensor data 24. As previously discussed, the operations may include decrypting the encrypted sensor data 24; and modifying and re-authenticating the sensor data.

When the invention is defined in broad terms, as above, the device 20 sends only the authorization token 23 to the sensor 10. In these cases, the device 20 may receive keys which are usable to execute all of the operations permitted by the access control data of the authorization token 23. However, in some cases where this is not desirable, the device 20 may send an access request to the sensor 10, the access request specifying a requested operation to be executed on the encrypted sensor data 24.

As we explained above with reference to the first aspect of the invention, the sensor data may include a first subset and a second subset, and the device 20 may be permitted to execute different operations on the different subsets. As before, the encrypted sensor data 24 may include a first subset of encrypted sensor data 24 and a second subset of encrypted sensor data 24. Then, the access control data may define a first operation which the device is permitted to execute on the first subset of encrypted sensor data 24, and/or a second operation which the device is permitted to execute on the second subset of encrypted sensor data 24. In such cases, as a result of the determination step which takes place at the sensor 10, the step of receiving may include: only if it defined in the access control data that the device is permitted to execute the first operation, receiving one or more keys usable by the device 20 to execute the first operation on the first subset of the encrypted sensor data 24; and only if it is defined in the access control data that the device 20 is permitted to execute the second operation, receiving one or more keys usable by the device 20 to execute the second operation on the second subset of encrypted sensor data 24. Of course, the sensor data may include more than just first and second subsets. The optional features described in this paragraph may be generalized to a general plurality of subsets of sensor data. Specifically, the device 20 may receive a plurality of subsets of encrypted sensor data 24, and the access control data may define one or more operations which the device 20 is permitted to execute on a respective subset of encrypted sensor data 24. For example, an operation may be defined for each of the subsets of data, only for one of them, or for some of them. Then, the method include a step of receiving from the sensor 10, one or more keys, each key usable by the device 20 to execute a permitted operation on a respective subset of the encrypted sensor data 24.

In cases where the device 20 sends an access request, the access request may specify one or more of: the first operation to be executed on the first subset of encrypted sensor data 24, and the second operation to be executed on the second subset of encrypted sensor data 24.

For added security, the sensor 10 may encrypt the key or keys before providing them to the device. In preferred implementations, the sensor 10 may be pre-loaded with a public key, and the device 20 may be pre-loaded with a private key, and the method may include a step of encrypting the key or keys using the public key. Because only the device 20 to which the key or keys are being sent has the private key which is capable of decrypting the encrypted keys, other external parties are prevented from accessing the key or keys, and accordingly, the sensor data. Method of the second aspect of the invention may include a corresponding step of decrypting the key or keys, preferably using a private key.

The method of the second aspect of the invention may further include a step of using the key or keys received from the sensor to execute the permitted operations, e.g. the first operation and/or the second operation.

Figs. 2 and 3 present a specific example of the method of the first and second aspects of the invention, in the form of a series of steps S1 to S12 which may be performed by system 1 of Fig. 1. In preferred cases, the steps S1 to S12 are performed that order, though the skilled person will appreciate that it may be possible to vary the order of some of the steps. Fig. 2 shows the steps which are performed by the sensor 10, and Fig. 3 shows the steps which are performed by the device 20.

In step S1, the sensor 10 generates sensor data. At this point, it is worth specifying some of the envisaged uses of the present invention. For example, the device 20 may be an edge gateway or control unit which manages several sensors, for which it needs different and specific accesses. One example may be a tracking control unit connected to a container which uses accelerometer data generated to guide specific operations (e.g. plane landing detection) and which also store encrypted data generated by temperature sensor or door status sensors to be reported in a cloud to guarantee transport quality and non-tampering. The integrity and privacy of temperature and door status tracking data are end-2-end protected between the sensor and the system. In another example: a vehicle (such as a car, a boat, a train etc.) with several sensors all connected to a local network in which there are different control units that need different and specific access to the data generated by the sensors. One sensor may provide different types of data to different control units, all managed and authorized by a system setup at production, in maintenance phase or in the field on-request when connected.

Once the sensor data has been generated by the sensor 10, in step S2, the sensor data is encrypted by the encryption module 12 of the processor 11. Then, in step S3, the transmitter 14 sends the encrypted sensor data 24 to the device 20, which is received by the receiver 21 of the device 20 in step S4 in Fig. 3. In preferred cases, the method further includes a step of deleting the sensor data after transmitting it to the device 20 for storage in memory 22. Alternatively put, the sensor 10 may be configured to delete the sensor data after transmitting it to the device 20 in storage in memory 22.

Then, in step S5, the encrypted sensor data 24 is stored in the memory 22 of the device 20. At this point, when a user of the device 20 wishes to access some or all of the encrypted sensor data 24, in step S6 the processor 25 of the device 20 may generate an access request, which may, optionally, specify a subset of the encrypted sensor data 24 which the user of the device 20 wishes to access. The access request is a request from the device 20 to execute some kind of operation on the encrypted sensor data, and will be discussed in detail later on in this application. In step S7, the transmitter 26 of the device 20 transmits the request to the sensor 10, along with the authorization token 23, or a copy thereof. It should be noted that in some cases, the transmitter 26 may transmit only the authorization token 23. In such cases, the sensor 10 may send to the device 10 the keys enabling all permitted actions to be executed.

The authorization token 23 includes access control data defining sensor data 24 which the device 20 is permitted to access. For example, the access control data may define one or more subsets of the sensor data 24 which the device 20 is permitted to access. In addition, the access control data may define operations which the device 20 may execute on the encrypted sensor data.

The features of the authorization token 23 will be described in more detail later on in this application. Returning to Fig. 2, in step S8, the receiver 15 of the sensor 10 receives the access request and the authorization token 23 from the transmitter 26 of the device 20. Then, in step S9, the access determination module 13 of the processor 11 of sensor 10 determines, based on the access control data in the authorization token 23, whether the device 20 is permitted to access the encrypted sensor data 24. In some cases, the access determination module 13 determines which encrypted sensor data 24 the device 20 is permitted to access, or which operations the device 20 is permitted to execute. This access determination process is central to the invention, and will be described in more detail later on. In step S10 the sensor 10, specifically the transmitter 14 thereof, sends one or more access keys to the device 10, the key(s) usable to execute the permitted operations. Returning finally to Fig. 3, the receiver 21 of the device 20 receives the access key in step S11, and the processor 25 of the device 20 uses the access key or keys to execute the permitted operation on the encrypted sensor data 24.

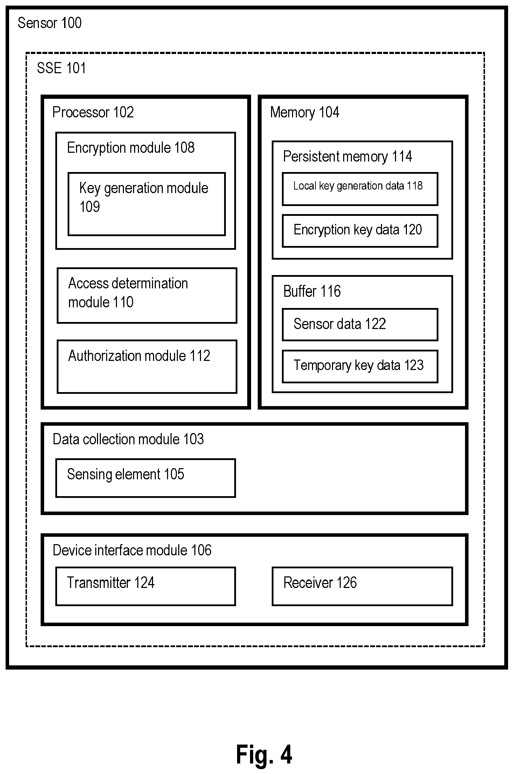

Fig. 4 shows an alternative example of a sensor module 100 which may form part of a system of the present invention or may perform a method of the present invention (e.g. steps S1, S2, S3, S8, S9, and S10 as shown in Fig. 2). The fundamental structure of the sensor module 100 of Fig. 4 is similar to the structure of the sensor 10 of Fig. 1, but shows numerous optional features.

Although the optional features of Fig. 4 are shown in a single drawing, it should be stressed that, by their very nature as optional features, it is not necessary for all of this features to be present in combination exactly as is shown in Fig. 4. They are shown in a single sensor 100 for illustrative purposes, and it should be understood that any, some, or all of the features shown in the alternative sensor 100 of Fig. 4 may be excluded from the example without the resulting arrangement falling outside the scope of this disclosure.

As with Fig. 1, we will first describe the structure of sensor 100, and then explain the function of the various optional modules. Sensor 100 includes a sensor secure environment (SSE) 101, which may be defined as sub-system of the sensor 100 which implements the controlled storage and use of sensor data. One purpose of secure environments such as SSE 101 is to protect secure/confidential data in the event of a data loss. SSE 101 may use cryptographic means, such as hashing, as a way to protect information. In Fig. 4, the SSE 101 includes processor 102, memory 104, data collection module 103, and a device interface module 106. It is preferable that the processor 102 and memory 104 are located within SSE 101, however, the device interface module 106 may be located within the sensor 100 but outside the SSE 101. The device interface module 106 acts as an interface between external signals and devices (e.g. device 20 or device 200) and the sensor 100. The device interface module 106 in Fig. 4 includes transmitter 124 and receiver 126. Alternatively, in other cases, the device interface module 106 may act as an interface only, and be configured to convey signals to a transmitter 124, and to receive signals from a receiver 126; such examples still fall within the scope of the invention.

The processor 102 of Fig. 4 may include one or more of: an encryption module 108, an access determination module 110, and an authorization module 112. Likewise, the memory 104 may include a persistent memory 114 and a buffer 116. The buffer may have a capacity of 100KB to 10MB. Here, the term "persistent memory" should be understood to refer to long-term memory, or permanent memory. Only data which requires long-term storage should be stored on the persistent memory 114, such as metadata 118 and encryption key data 120 in the present example. The nature of this data will be described in more detail later on. Buffer 116 is short-term memory, and may be used to store sensor data 122 after it has been generated and before it has been transmitted by e.g. transmitter 124 to the device (e.g. 20 or 200).

The function of the components shown in Fig. 4 will now be described in more detail, in the context of the high-level method of Figs. 2 and 3, setting out any further optional features.

The data collection module 103 is the module of the sensor 100 which performs the sensing itself, and as such it may include a sensing element 105 which is configured to sense, detect, and/or measure, some external parameter. The sensing element 105 may include one or more of the following: a temperature sensor, a light sensor, a sound sensor, a moisture sensor, a CO₂ sensor, a smoke sensor, a pressure sensor, a humidity sensor, a proximity detector or a camera. It may also include a device or devices configured to measure one or more of the following: voltage, current, resistance, magnetic field strength, magnetic flux density, capacitance, inductance, frequency, and wavelength. The sensing element 105 may also include an accelerometer. It will be appreciated the sensing element 105 may include a device which is configured to sense, detect, or measure any form of external physical or environmental stimulus. As well as detecting a physical or environmental stimulus, the sensing element 105 may be implemented in the form of a software module, which is configured to detect the occurrence of a predetermined process in a computer device (such as a computer, a tablet, or a smartphone). For example, the sensing element 105 may be configured to detect a predetermined data processing operation, or to detect a particular result of a data processing operation. The sensing element 105 may include a counter configured to count the number of times a particular event takes place. The data collection module 103 may optionally include its own processor, configured to convert the raw data collected by the sensing device 105 into a form which can be processed by the processor 102. Alternatively, the raw data may be sent straight to the processor 102, whereupon it is converted into a more suitable form. It should be appreciated that the sensor 100 may include more than one data collection module 103. Each data collection module 103 may also include one or more sensing element 105, of the type described in this paragraph.

In step S2 of Fig. 2, the sensor data is encrypted. Before discussing the encryption process, it is useful to describe in some more detail the possible nature of the sensor data which is obtained, and optional processes that may be carried out on it before it is encrypted.

When a piece of sensor data is first collected, the processor 102 may be configured to generate a header, and append that header to the piece of data. Between collection of data and the appending of the header, the piece of sensor data may be stored in the buffer 116 of the memory 104 of the sensor 100 for processing. The buffer 116 is suitable for this storage, because it is short term storage only. The header preferably contains metadata containing information about that piece of sensor data, the metadata preferably including one or more of: a timestamp indicating a time and/or date at which the data was collected, a sensor ID indicating the identity of the sensor 100 or sensing element 105 which collected the data, a data type indicating the type of data (e.g. the physical parameter to which the data pertains, or the type of activity detected), nonce material, and key-generation data which may be used to generate the required keys, sensor information such as hardware and firmware references (e.g. ID and version). These are referred to as "types of metadata". The sensor data may be divided into a plurality of subsets. These may be exclusive subsets, i.e. each piece of sensor data belongs to one subset only. Alternatively, each piece of sensor data may belong to one or more subsets. A subset may including only a single piece of sensor data.

The sensor data may be subdivided into subsets based on a first type of metadata. In other words, the sensor data may be divided into a plurality of subsets, each subset being recorded within a different time frame, or each being a different type of data, or each being recorded by a different sensor. The sensor data may be further divided into a plurality of subsets based on a second type of metadata.

Here, the term "divided" need not mean that the sensor data is partitioned, or that the different subsets are stored separately from each other, though this may optionally be the case. Preferably, though, the plurality of subsets may be assigned based on the metadata, but (at least at this point) are not separated from each other. At this point, we have established a plurality of subsets of data, each piece of data optionally including a header containing metadata which provides information about that data, and the subsets being based on the metadata. At this point, the pieces of data with the appended headers may temporarily be stored in the buffer 116 of the memory 104 of the sensor 100.

Then, the encryption module 108 of the processor 102 is configured to encrypt the sensor data, to generate encrypted sensor data. The encryption module 108 may be configured to encrypt both the sensor data and the header, but preferably encrypts only the sensor data. Specifically, the encryption module 108 is configured to encrypt each of the plurality of subsets of data with a different respective encryption key.

In the case where each piece of sensor data belongs to a single subset of the plurality of subsets, this is straightforward.

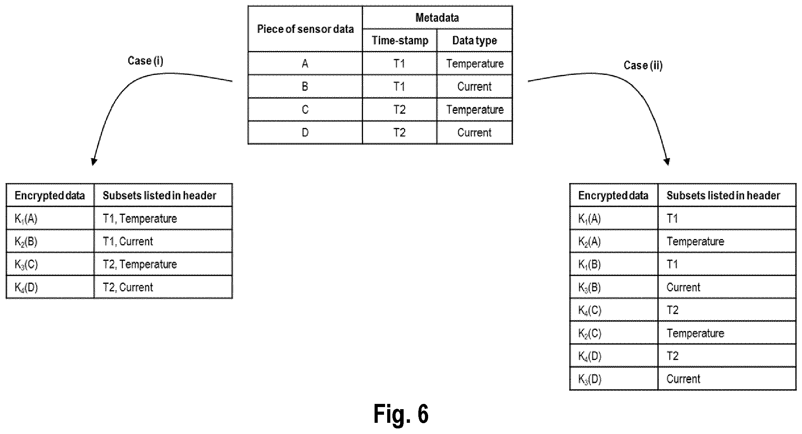

However, in the event that a piece of data may belong to or be assigned to more than one subset (e.g. a subset established based on the time at which the data was recorded, and a subset based on the sensing element 105 which recorded the data), the situation is more complex, and may be addressed in any of the following ways:
(i) The encryption module 108 may be configured to encrypt each piece of sensor data with a different respective key, to generate a single set of encrypted sensor data, each piece of encrypted sensor data corresponding a respective piece of (raw, unencrypted) sensor data. Then, the processor 102 (optionally the encryption module 108 thereof) may append a header to each piece of encrypted sensor data, the header including metadata identifying the subset or subsets of data to which that piece of encrypted sensor data belongs (or more specifically, the subset or subsets to which the corresponding unencrypted sensor data belongs). This is illustrated in Fig. 6, in which keys K₁ to K₄ are used to encrypt, respectively, pieces A to D of sensor data. Here, one piece of sensor data is generated per encryption, and two subsets are identified in each header.
(ii) The encryption module 108 may be configured to encrypt each piece of data in each respective subset with the same encryption key, to generate plurality of pieces of encrypted data corresponding to a subset of the raw, unencrypted sensor data. The encryption module 108 may be configured to do this for all subsets of data (noting that these subsets may overlap). In the event that the plurality of subsets of sensor data overlap (i.e. wherein each piece of sensor data belongs to more than one subset), for a given piece of unencrypted sensor data, a plurality of pieces of encrypted sensor data may thereby be generated, each piece of encrypted sensor data being encrypted with a different respective encryption key, each encryption key associated with a respective one of the subsets to which that piece of unencrypted sensor data belongs, or is assigned to. Again, the processor 102 (optionally the encryption module 108 thereof) may append a header to each piece of encrypted sensor data, the header including metadata identifying the subset of data to which that piece of encrypted sensor data belongs (or more specifically, the subset or subsets to which the corresponding unencrypted sensor data belongs). This is illustrated in Fig. 6, in which it can be seen that each piece of sensor data is encrypted twice: once with the key corresponding to its "time subset", and once with the key corresponding to its "data type" subset. K₁ is used for data in the T1 subset, K₂ is used for data in the temperature subset, K₃ is used for data in the current subset, and K₄ is used for data in the T2 subset. It may be seen that according to case (ii), twice as much encrypted data is generated.

We now discuss how the encryption takes place. In a simple case, the encryption module 108 may be configured to encrypt a given piece of sensor data (throughout this application, unless otherwise specified, the term "sensor data" can be understood to refer to unencrypted sensor data) using an encryption key to generate a corresponding piece of encrypted sensor data. The encryption key may be a symmetric key or an asymmetric key. Each of these types of keys has associated advantages, depending on the priorities of the system. For example, symmetric keys are far simpler to generate, so if the encryption key is a symmetric key, the processing requirements of the processor 102 are reduced, allowing for the sensor 100 to be simpler, smaller, and cheaper to manufacture. On the other hand, an asymmetric key is more secure, but requires greater processing capability to generate and apply.

In order to be able to identify and transmit the appropriate access key to the device 20 or 200 in response to a request and a determination that access is permitted, the sensor 100 must be able either to store the keys in association with the metadata identifying the sensor data or encrypted data in the memory 104. Alternatively, in order to reduce the memory requirements of the memory 104 of the sensor 104, the processor 102 of the sensor 100 may be able to reliably re-generate the access keys based on some input. Both of these possibilities are described below.

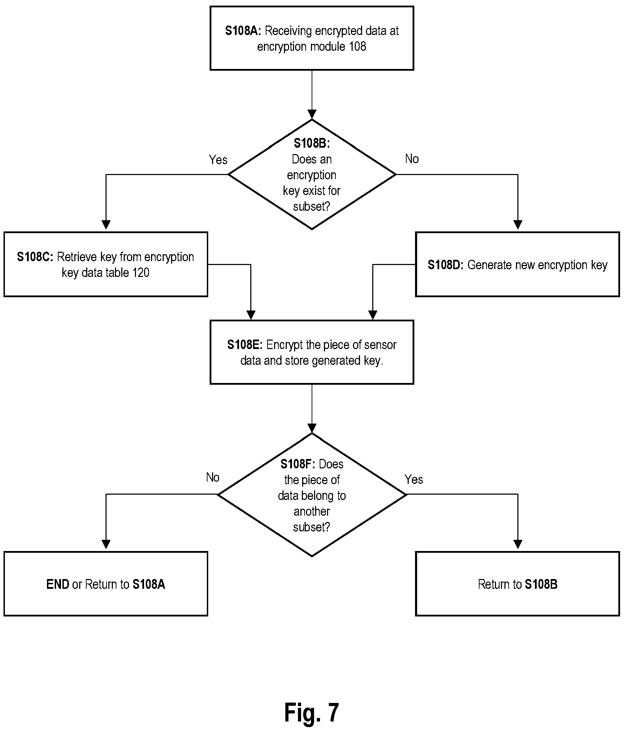

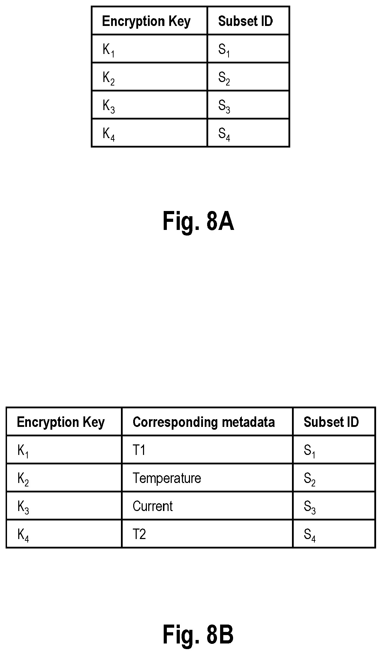

The method of the first case is illustrated in Fig. 7, which illustrates the process being performed on a single piece of sensor data. In step S108A, the piece of sensor data is received at the encryption module 108, the piece of sensor data including metadata, the metadata identifying a subset to which that piece of sensor data belongs. Then, in step S108B, the encryption module 108 (or alternatively the processor 102) is configured to perform a lookup in the encryption key data table 120 to determine whether an encryption key exists corresponding to the subset. Optionally, before this step is performed, the encryption module 108 or the processor 102 may remove the header from the piece of sensor data, and extract the metadata either containing or indicating the subset ID from the piece of sensor data (not shown). In the event that an encryption key does exist, in step S108C, the key is retrieved from the encryption key data table 120, and used to encrypt the piece of sensor data in step S108E. In the even that it determined that no key exists corresponding to the subset, a new key is generated in step S108D, for example by key generation module 109, and stored in the encryption key data table 120, before that key is used to encrypt the piece of sensor data in step S108E. The method may stop here, but alternatively, it may continue to step S108F in which it is determined whether the piece of sensor data belongs to any additional subsets. If not, processing of that piece of data is complete, and the method may optionally return to step S108A, receiving a further piece of sensor data. Otherwise, if it is determined that the piece of sensor data does belong to another subset of sensor data, then the method returns to step S108B. Using this method, as more sensor data is received, the encryption key data table 120 grows. Two examples of example layouts of the encryption key data tables are shown in Figs. 8A to 8B. In Fig. 8A, the encryption keys are stored in association with subset IDs denoting a particular subset, whereas in Fig. 8B, the encryption keys are stored in association with a particular piece of metadata corresponding to a subset and a subset ID. In a slightly different case, the subset ID may not be included in the encryption key data table 120.

It should be noted that, where asymmetric keys are used by the encryption module 108 to encrypt the piece of sensor data, in step S108D both the encryption key and the complementary decryption key should be generated, and then both are stored in the encryption key data table 120. Alternatively, once the encryption key has been generated and used, it may be deleted, and only the decryption key stored.

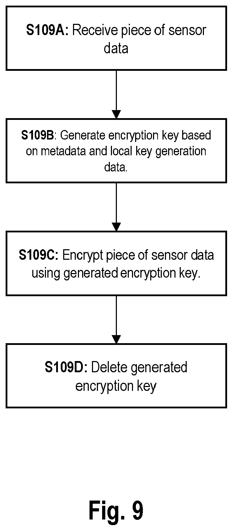

In the examples given above, an encryption key data table 120 is generated and grown with the receipt of more and more sensor data. In some cases, e.g. when the capacity of memory 104 is limited, this may be undesirable. So, in an alternative example, the key generation module 109 may be configured to generate an encryption key which is based on one or more of the metadata or subset ID, and local key generation data 118, which is unique to the sensor 100 and secret. In this way, once the encryption key has been generated, there is no need to store it in the memory of the sensor 100, or elsewhere, because it can be reliably regenerated based on metadata relating to the sensor data which it protects. All that need be stored in the memory is the local key generation data 118. Fig. 9 shows an example of this method. In step S109A, a piece of sensor data is received at the encryption module. Then in step S109B, the key generation module 109 may generate an encryption key based on the metadata in the header of the piece of sensor data, and the local key generation data 118. It is important that the local key generation data 118 is used, and remains secret, otherwise it would be possible for any other actor to re-generate the key with only knowledge of the metadata, presenting a clear and not insignificant security risk. In step S109C, the generated encryption key is used to encrypt the piece of sensor data. Then, the generated encryption key may be deleted in step S109D. Alternatively, the generated encryption key may be stored in the buffer 116 in the temporary key data table 123. In this way, when another piece of sensor data from the same subset is encountered, the encryption module 108 may perform a lookup in the temporary key data table 123, in order to determine whether an encryption key corresponding to that subset has already been generated, in which case that encryption key is retrieved from the temporary key data table 123, and used to encrypt the subsequent piece of sensor data. This may be particular useful in scenarios in which the subsets are based on the time at which the data is collected, so the same encryption key can be used to encrypt a series of pieces of sensor data, all of which were collected within a predetermined time range. Accordingly, the generated encryption keys which are stored in the temporary key data table 123 may have an associated lifespan or expiry time, after which they are deleted from the table 123. After the piece of sensor data has been encrypted in step S109C and deleted in step S109D, the method returns to step S109A, with the arrival of a new piece of sensor data. In cases where asymmetric keys are generated, in step S109B both the encryption key and complementary decryption key are generated by the key generation module 109. Then, the encryption key (preferably a private key) is used to encrypt the piece of sensor data in step S109C. The decryption key is preferably a public key.

The encryption of the data using the generated or retrieved encryption keys ensures that the data is, effectively, scrambled beyond recognition, in order to ensure that it is confidential, i.e. ensuring that a user intercepting its transmission is unable to derive any meaning from it. In addition to encrypting the sensor data, it is also important that the sensor 100, and the device 20 or 200 are able to ensure that the data that they have received is received from the entity that they believe it has been received from - this is known as "authentication". A number of schemes are available for this process, such as encrypt-then-MAC, MAC-then-encrypt, and encrypt-and-MAC. It is preferred that the encrypt-then-MAC process is used in the present invention. This will be explained for a first piece of sensor data, but it will be understood that the method may be applied to every incoming piece of sensor data.

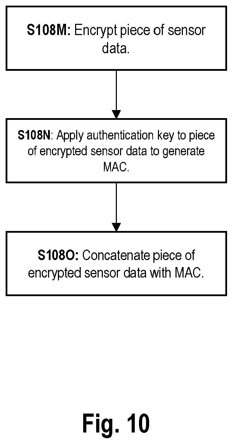

An example of this is shown in Fig. 10. Firstly in step S108M, the piece of sensor data may be encrypted as explained in the preceding paragraphs, to generate a piece of encrypted sensor data. Then, in step S108N the encryption module 108 may be configured to apply an authentication key to the piece of encrypted sensor data, to generate a message authentication code (herein, "MAC"). It should be stressed that the piece of encrypted sensor data is not deleted; the MAC is generated alongside the piece of encrypted sensor data. Then in step S108O, the piece of encrypted sensor data and the MAC may be concatenated, to generate a message. The fate of such a message is discussed later on. In some cases, an authentication key may be applied to the sensor data before it is encrypted using the encryption key. This is described elsewhere in this application.

At this point, in step S3 of Fig. 2, the encrypted sensor data is transmitted, by the transmitter 124 to the device 20 or 200. Specifically, either the piece of encrypted sensor data may be transmitted, or the message generated as explained in the previous paragraph. In some cases, rather than transmitting the encrypted sensor data as soon as it is generated, the encryption module 108 may transmit the piece of encrypted sensor data to the buffer 116 for temporary storage. The transmitter 124 may then send all of the encrypted sensor data in the buffer 116 either when it exceeds a predetermined threshold volume. Alternatively, the transmitter 124 may be configured to send all of the encrypted sensor data in the buffer 116 at regular time intervals. Before discussing in more detail the steps which are performed by the device 20 or 200, it is useful to consider in more detail the structure of the device.

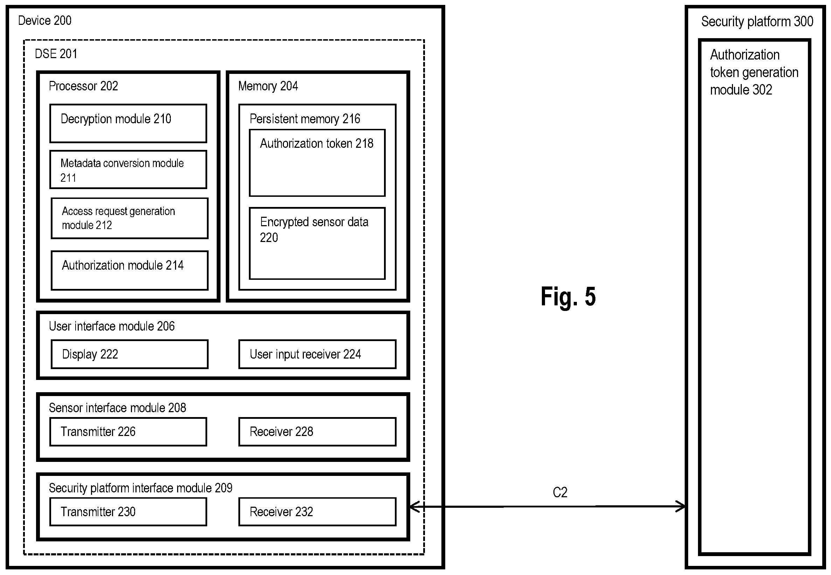

Accordingly, much like Fig. 4, Fig. 5 shows an alternative example of a device 200 which may form part of a system of the present invention or may perform a method of the present invention (e.g. steps S4, S5, S6, S7, S11, and S12). The fundamental structure of the device 200 of Fig. 5 is similar to the structure of the device 20 of Fig. 1, but shows numerous optional features. Although the optional features of Fig. 5 are shown in a single drawing, it should be stressed that, by their very nature as optional features, it is not necessary for all of this features to be present in combination exactly as is shown in Fig. 5. They are shown in a single device 200 for illustrative purposes, and it should be understood that any, some, or all of the features shown in the alternative device 200 of Fig. 5 may be excluded from the example without the resulting arrangement falling outside the scope of this disclosure.

Before discussing the components which make it up, it is important to consider what the device 200 actually is. In preferred cases, the device 200 is an edge device. In the context of the present invention, the term "edge device" should be understood to refer to a device which provides an entry point into a network of devices, the device having some processing capability of its own, in order to allow processing to take place non-centrally, thus improving the efficiency of the overall network. In some cases, the device may be a server. The device may also be an electronic control unit of a vehicle or other system, or a basic embedded system with a multipoint control unit (MCU) which uses one or more types of sensor data as an input.

The device 200 of Fig. 5 is connected via a connection C2 to a security platform 300. The security platform 300 includes an authorization token generation module 302, the function of which will be described later. Like e.g. the sensor 100, the device 200 includes a secure environment, in this case a device secure environment (DSE) 201. In the example shown in Fig. 5, the DSE 201 includes: a processor 202 and a memory 204. In addition, the DSE 201 may also include: a user interface module 206, a sensor interface module 208, and a security platform interface module 209. Even though, the five aforementioned components are shown to be part of the DSE 201 in Fig. 5, it must be appreciated that one or more, or all of the components could be located outside of the DSE 201. The processor 202 may include one or more of: a decryption module 210, an access request generation module 212, and an authorization module 214. The memory 204 may include a persistent memory 216 (having the same meaning as in Fig. 4), which itself may store an authorization token 216 and encrypted sensor data 220. The user interface module 206 may include a display 222 and a user input receiver 224. The sensor interface module 208 may include a transmitter 226 and a receiver 228. Finally, the security platform interface module 209 may also include a transmitter 230 and a receiver 232 (which may, optionally, be the same, respectively, and the transmitter 226, and the receiver 228). The operation of the various components of Fig. 5 will now be described in the context of the method shown in Fig. 3, as well as the disclosure of optional features.

In step S4, the receiver 228 of the sensor interface module 206 receives the encrypted sensor data which was transmitted by the transmitter 124 of the sensor 100. Thereupon, in step S5, the received encrypted sensor data 220 is stored in the persistent memory 216.

At this point, it may be necessary for a user of the device 200 to access a subset of the data collected by the sensing element 105 of the data collection device 103 of the sensor 100. The user is typically a maintenance user who needs to access a data of the sub-system (i.e. a sensor data stored in the device 20). The user may connect to the device with e.g. a smartphone, a USB stick, a maintenance device or a device UI, provides their credential to get the authorization token to request the secret key to process the sensor data.

In order to do so, in step S6, the access request generation module 212 generates an access request. The data to which the user is permitted access is governed by the authorization token 218, so before discussing the generation of the request by the access request generation module 212, the nature of the authorization token 218 is described.

Broadly speaking, the authorization token 218 is an electronic token which is deployed in the persistent memory 216 of the memory 204 of the device 200, which includes access control data defining one or more subsets of sensor data which the device 200 is permitted to access. As is illustrated in Fig. 5, the authorization token 218 may be generated by an authorization token generation module 302 of a security platform 300.

The authorization token 218 may define the subsets using e.g. a subset ID, or preferably in terms of the metadata associated with the subset. Specifically, the authorization token 218 may define one or more of the following:
- The type of data which the device 200 is permitted to access. For example, the authorization may specify that the device 200 is permitted to access temperature data only.
- The timestamp or range of timestamps of data which the device 200 is permitted to access. For example, the authorization token 218 may specify that the device 200 is permitted to access data recorded in October 2020 only.
- In systems in which there are more than one sensor 100, the authorization token may specify that the device 200 is permitted to access from one specific sensor 100 only. Alternatively, in systems in which a system 100 includes a plurality of sensing elements 105, the authorization token 218 may specify that the device 200 is permitted to access data collected by one specific sensing element 115 only.

In addition to specifying metadata related to the collected sensor data, the authorization token 218 may also include other constraints. For example, in some cases, the authorization token 218 may define one or more validity conditions. Herein, a "validity condition" refers to a rule defining when the authorization token 218 may be valid, may be used, or may be effective. If the validity condition is not met, then the authorization token 218 is deemed invalid. The validity conditions may include one or more of the following:
- A restriction on the time period(s) for which the authorization token 218 is valid. For example, the authorization token 218 may only be valid for the first day of every month, or may only be valid for one year.¹ After this point, the authorization token 218 may expire.
- A restriction on the number of times that the authorization token 218 may be used. The authorization token 218 may include a usage counter which is incremented by one every time it is used, and the authorization token 218 may expire after the usage counter reaches a predetermined value.
- A restriction on who may use the authorization token 218. To this end, the authorization token 218 may specify a user credential or set of user credentials for which it is valid. In this case the processor 102 of the sensor 100 or the processor 202 of the device 200 may be configured to compare a user credential in the authorization token 218 with e.g. a user credential included in the request, or a user credential received at the user input interface 206 of the device 200. Then, if the user credentials do not match, the authorization token 218 may be deemed invalid.
- In a system including a plurality of devices 200, the authorization token 218 may also specify a specific device 200 (or devices) which are permitted access to the requested sensor data. In the event that the request comes from a different device, the authorization token 218 may then be deemed invalid and the request denied.
¹ This is not to be confused with the restriction on the time period over which the sensor data is recorded. The validity conditions are a property of the authorization token itself, and apply regardless of the nature of the sensor data in question.

The authorization token 218 may specify specific types of access to the data:
- The authorization token 218 may specify that the device 200 is permitted only to decrypt and read the encrypted sensor data 220 in question. In other words, the device 200 would not be able to modify the data.
- The authorization token 218 may specify that the device 200 is permitted to decrypt and authenticate the encrypted sensor data 220 in question.
- The authorization token 218 may specify that the device 200 is permitted only to authenticate the encrypted sensor data 220 in its encrypted form, i.e. not to decrypt it.

Optional features of this process will now be explained, with reference to Fig. 5. In step S6, an access request is generated. In some examples of the method, the access request includes an indication of a subset or subsets of encrypted sensor data. However, in other cases, the request does not include such an indication. In these latter cases, step S7 simply involves transmitting the request to access some data, and the authorization token 218 to the sensor 100.

It is desirable, however, for the request to include some indication of the encrypted sensor data 220 stored in the memory 204 of the device which the device 200 wishes to access (i.e. decrypt). Before the access request is generated, the under input receiver 224 of the user interface module 206 may receive a user input from a user. The user input may be in the form of a request to access a specific subset of the data obtained by the sensor 100. The request may include information identifying the subset of sensor data which the user wishes to access, for example, it may include the type of data, the time frame during which the data was collected, and/or the specific sensor or sensing element which collected the data. It will be recalled that when the data was first collected, a header containing metadata may have been appended thereto, the metadata including information about the specific piece of sensor data. In some cases, the request from the user may include metadata in the same form.

After the request for data has been received via the user interface module 208, the access request generation module 212 generates a request based on what is received from the user. There are a number of ways in which this may take place, all having broadly the same result. Broadly, these may be divided into two categories: (i) cases in which the request identifies the subset ID, and (ii) cases in which the request does not identify the subset ID.
(i) In some cases, the request received by the user input receiver 224 may include the metadata in a form which is compatible with or equivalent to the form in which the metadata is stored in the memory, then the request may be forwarded straight to the access request generation module 212. The access request generation module 212 may then be configured to perform a lookup in the encrypted sensor data 220 in order to determine the subset or subsets of data corresponding to the metadata in question. For example, to use the example of the data in the central table of Fig. 6, if the access request was for all temperature data, then the "temperature" subset would be returned. As is apparent from the rest of the application, the subset may have an associated e.g. numerical or alphanumeric subset ID. The access request generation module 212 then generates a request containing the subset IDs corresponding to all of the metadata received via the user interface. Optionally, the request may also include the metadata too. In a slightly modified version of this approach, if the request received by the user input receiver 224 includes data in an unsuitable format for processing by the access request generation module 212, then the method may include a further step of converting the request received at the user interface 206 into metadata in a suitable form for processing by the access request generation module 212. Accordingly, the processor 202 may further include a metadata conversion module 211 as shown in Fig. 5.
(ii) Alternatively, once the request has been received at the user interface 206, the access request generation module 212 may be configured to generate a request including the metadata, with no lookup and identification of the subset ID.

At this point, the access request generation module 212 has generated the request, the request optionally including an indication of the subsets of the encrypted sensor data 220 which it would like to be able to decrypt. The indication of the subsets may be in the form of metadata relating to the data, or in the form of a subset ID.

Then, in step S8, the transmitter 226 of the sensor interface module 208 sends the request and the authorization token 218 to the sensor 100. At this point, we return to Fig. 2, step S8, in which the receiver 126 of the device interface module 106 receives the request and the authorization token 218.

Before determining, by the access determination module 110, which sensor data the device 200 is permitted to access, the processor 102 or the sensor 100, or the access determination module 110 may optionally first determine whether the validity condition is met, if the authorization token 218 includes one.

Then, in step S9, the processor 102 (specifically, the access determination module 110 thereof) determines, using the authorization token 218, whether the device 200 is permitted to access the sensor data which it has requested. There are a handful of scenarios here: scenarios in which the request does not include an indication of the requested data, scenarios in which the request includes the metadata but not the subset ID, and scenarios in which the request includes the subset ID. These are discussed below.
(i) In the cases where the request doesn't include an indication of the requested data, the only information which the sensor 100, specifically the access determination module 110 thereof, has to go on is the information stored in the authorization token 218 which is receives alongside the request for data. Effectively, this is a request for the decryption key for all of pieces of encrypted sensor data which the device 200 has permission to access. As discussed previously, the authorization token may include metadata identifying the subsets of data to which the device 200 has access, or it may include the specific subset ID. In either case, the access determination module 110 may then perform a lookup for the metadata and/or subset IDs in the encryption key data table 120, and to retrieve the decryption keys associated with each of the pieces of metadata or subset IDs. It will be understood that, in the event that the encryption key is symmetric, the decryption key is the same as the encryption key.
(ii) In the instances where the request specifies the metadata which the device 200 wishes to access, it is first necessary to verify whether access is permitted by the device 200 to that data. Accordingly, the access determination module 110 validates the metadata or subset IDs in the request based on the access control data of the authorization token 218. Specifically, the access determination module compares the metadata or subset IDs in the request with the metadata or subset IDs listed in the access control data. A number of outcomes may occur:
   - If it is determined that the device 200 is permitted to access all of the requested metadata or subset IDs, the access determination module 110 may perform a lookup of all of the metadata or subset IDs in the request in the encryption key data table 120 and to retrieve the decryption keys associated with each of the pieces of metadata or subset IDs. It will be understood that, in the event that the encryption key is symmetric, the decryption key is the same as the encryption key.
   - If it is determined that the device 200 is permitted only to access some of the requested metadata or subset IDs in the request, either:
      a. The request will considered void, and the method ends, or
      b. The access determination module 110 will determine which of the metadata or subset IDs in the request the device 200 **is** permitted to access, and to perform a lookup of only those metadata or subset IDs in the encryption key data table 120 and to retrieve the decryption keys associated with each of those pieces of metadata or subset IDs. It will be understood that, in the event that the encryption key is symmetric, the decryption key is the same as the encryption key.
   - If it is determined that the device 200 is not permitted to access any of the requested metadata or subset IDs, the request will be considered void, and the method ends.

Optionally, there may be an additional step wherein the processor 102 performs a lookup to identify the subset IDs corresponding to metadata in the request or the metadata which the device 200 has access to, and then performing the lookup of the encryption key data table 120 using the identified subset IDs as the input.

The above refers to scenarios in which the encryption/decryption keys are stored in the encryption key data table 120. However, we have also discussed the possibility that the encryption and/or decryption keys may be generated based on the metadata and/or subset IDs, and locally-stored key generation data 118. In these cases, if there is no data specified or indicated in the request, then the access determination module 110 may forward all of the metadata and/or subset IDs defined in the access control data of the authorization token 218 to the encryption module 108, the key generation module 109, or any other appropriate module of the processor 102 (not shown). There, the method may include a step of generating a decryption key for each piece of encrypted sensor data corresponding to the metadata and/or subset IDs defined by the access control data. The decryption key is generated deterministically, in the same way as the encryption key, as discussed earlier in the application.

The process for cases in which the request includes an indication of the requests metadata/subset IDs is analogous. It is first necessary to verify whether access is permitted by the device 200 to that data. Accordingly, the access determination module 110 validates the metadata or subset IDs in the request based on the access control data of the authorization token 218. Specifically, the access determination module compares the metadata or subset IDs in the request with the metadata or subset IDs listed in the access control data. Then, as before:
- If it is determined that the device 200 is permitted to access all of the requested metadata or subset IDs, the access determination module 110 may forward all of the metadata and/or subset IDs defined in the request to the encryption module 108, the key generation module 109, or any other appropriate module of the processor 102 (not shown). There, the method may include a step of generating a decryption key for each piece of encrypted sensor data corresponding to the metadata and/or subset IDs defined by the access control data. The decryption key is generated deterministically, in the same way as the encryption key, as discussed earlier in the application.
- If it is determined that the device 200 is permitted only to access **some** of the requested metadata or subset IDs in the request, either:
   a. The request will considered void, and the method ends, or
   b. The access determination module 110 will identify which of the metadata or subset IDs in the request the device 200 **is** permitted to access. Then, the access determination module 110 may forward all of that identified metadata and/or subset IDs defined in the access control data of the authorization token 218 to the encryption module 108, the key generation module 109, or any other appropriate module of the processor 102 (not shown). There, the method may include a step of generating a decryption key for each piece of encrypted sensor data corresponding to the metadata and/or subset IDs defined by the access control data. The decryption key is generated deterministically, in the same way as the encryption key, as discussed earlier in the application.
- If it is determined that the device 200 is not permitted to access any of the requested metadata or subset IDs, the request will be considered void, and the method ends.

At this point, decryption keys corresponding to the pieces of encrypted sensor data 220 defined by the metadata or subset IDs have been generated or retrieved on the sensor 100, e.g. by the key generation module 109, the access determination module 110, or any other suitable module on the processor 102. In some cases, decryption keys corresponding to all of the pieces of encrypted sensor data 220 defined by the metadata or subset IDs to which the device 200 is permitted access, as defined by the access control data in the authorization token have been retrieved or generated. In other cases, decryption keys corresponding to all of the pieces of encrypted sensor data 220 defined by the metadata or subset IDs included in the request have been retrieved or generated. And, in other cases, decryption keys corresponding to all of the pieces of encrypted sensor data 220 defined by the metadata or subset IDs included in the request, and to which the device 200 is permitted access, as defined by the access control data in the authorization token have been retrieved or generated. Then, in step 510, the transmitter 124 of the device interface module 106 of the sensor 100 transmits those decryption keys to the device 200.

Returning to Fig. 3, the receiver 228 of the sensor interface module 208 of the device 200 receives the transmitted keys, and the decryption module 210 of the processor 202 is then able to use the received decryption keys to decrypt the required data, for further processing, completing the method.

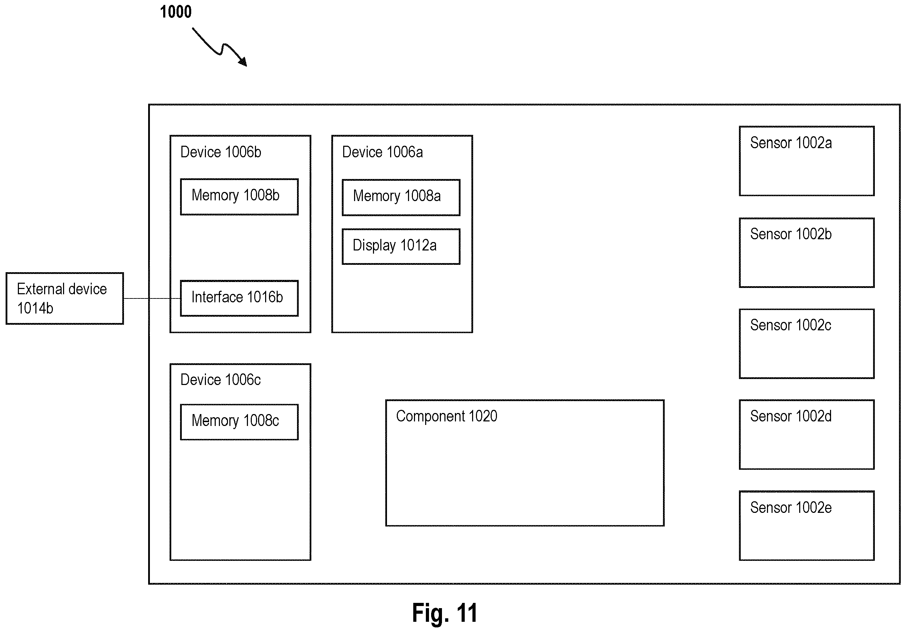

Fig. 11 shows a system 1000, which includes various components. As will be appreciated from the following description, system 1000 represents an environment in which the present invention may be deployed. Specific use cases, with reference in particular to the types of sensor and operating parameters in question are also described below. The details of the method of the invention, which has been described in detail above in the foregoing description, and the various optional are not repeated here, but it should be understood that where compatible, any features previously described may be combined with any of the following features.

System 1000 includes a plurality of sensors 1002a, 1002b, 1002c, 1002d, 1002e (though it will be appreciated that the container may include any number of sensors, including just a single sensor 1002). Each of the sensors 1002 may be configured to perform the method of the first aspect of the invention. Each sensor 1002, may include a buffer memory in which sensor data is stored temporarily, e.g. a protection key generated and stored on the respective sensor 1002. Alternatively, as discussed previously, the sensor 1002 may generate the keys on an *ad hoc* basis, and the keys may be used only to protect the generated sensor data, and not be stored on the sensor 1002. The sensors 1002 may be as described previously in this application.

The system 1000 also includes a plurality of devices 1006a, 1006b, 1006c. In the example shown in Fig. 11, each of the devices 1006 may correspond to a respective sensor 1002. However, this need not be the case. For example, it is envisaged that each of the sensors 1002 could send their generated protected sensor data to a single device 1006. Alternatively, a single sensor 1002 might send different kinds of protected sensor data to different devices 1002. In this example, the devices 1006 may be in the form of monitoring stations on or near the system 1000, alternatively they may be terminal devices (accessible by a user), or control units. One example of each of these is shown in Fig. 11, for illustrative purposes.

Each of the devices 1006 may include a memory 1008a, 1008b, 1008c, (where the protected sensor data may be stored), and a respective processor 1010a, 1010b, 1010c. One use of the devices 1006 is to allow a user to access the permitted data, e.g. for system maintenance, control or quality control purposes. A few examples (to reiterate, although these examples are disclosed here in combination with the specific example of system 1000, they may be applied generally to any implementation of the invention):
- Device 1006a may be a terminal having a display 1012a. The memory of the terminal 1008a may include the authorization token which includes the access control data. In such cases, when a user wants to access the protected sensor data, they may activate the terminal, and input instructions causing the terminal 1006a to send an access request and/or the authorization token to the sensor 1002a. Thereupon, in line with one of the embodiment of the invention, the sensor 1002a may send the relevant access keys to the terminal 1006a, allowing the user the relevant access, e.g. to view the data on the display, or to modify and re-encrypt the data.
- Device 1006b may also be a terminal having a display 1012b. In this example, the terminal 1006b differs from the terminal 1006a in that terminal 1006b does not have an authorization token . In this case, a user wanting to access the protected sensor data may have their own portable device 1014b (such as a portable computer, laptop computer, tablet, smartphone or the like) having the authorization token deployed thereon. The device 1006b includes an interface 1016b (which may be a physical or wireless interface) via which the user may connect the portable device 1014b. Then, the portable device 1014b may deploy the authorization token to the device 1006b. At this point the authorization token may be considered to be deployed on the device 1006b. Alternatively, the authorization token may remain on the portable device 1014b. In this scenario, the combination of the device 1006b and the portable 1014b may be considered to represent "a device having have the authorization token deployed thereon", or equivalent. At this point, the steps described above may be performed. The data access may either by via display 1012b or a display 1018b of the portable device 1014b.
- Device 1006c may be a control unit, which is configured to control one or more operating parameters of a component 1020 in the system 1000. The control unit 1006c of the system 1000 may be configured to adjust the one or more operating parameters based on sensor data. In order to obtain the sensor data, the control unit 1006c must access the protected sensor data which is stored in its memory 1008c. The control unit 1006c has stored thereon the authorization token, though it may be deployed via a portable device. Then in line with one embodiment, the control unit 1006c may receive an appropriate key to access the desired data. Then, the control unit 1006c may be configured to vary, select or otherwise determine a value of one or more operating parameters based on the sensor data. By protecting the data in line with the invention, it is possible to ensure that unauthorized devices are not able to control the operating parameters.

Some specific use cases are described below.

In one scenario, the system 1000 may in the form of a container (such as a shipping container) for transporting goods. For example, the container may be configured to transport foodstuffs over long distances. In this case, the container may include a refrigeration unit, the refrigeration unit may include a temperature sensor, and the operating parameter may be the temperature of a storage area of the refrigeration unit.

In this way, the system 100 is able to securely monitor the temperature of the refrigeration unit, and to adjust the temperature based on the temperature data which is received. In the container example, other sensors which may be included are other kinds of environmental sensors such as temperature sensors, humidity sensors, pressure sensors, door-status sensors, motion sensors, and the like. Users such as maintenance staff or engineers can thereby monitor the conditions in the container, without any risk that the sensor data has been tampered with, since only authorized personnel will be able to access the data, and it can be ensured that any tampering is detectable.

In an alternative case, the system 1000 may be in the form of a vehicle, such as a car, a train, a plane, a bus, a helicopter, or any other vehicle. In preferred cases, the system 1000 may be in the form of a "smart" vehicle. The invention could be particularly advantageous in two scenarios in a vehicle or a smart vehicle (having various types of sensors such as radar sensor, laser sensor, including 3D lidar sensor, or ultrasonic sensor):
- **Monitoring.** In this case, the sensors may include wear sensors which are each configured to monitor the wear of a respective component of the vehicle, or other sensors which are configured to measure parameters indicative of the "health" or "wear" of vehicle components. In a particularly advantageous case, when the sensor or device detects that the value of the measured parameter meets or exceeds a predetermined threshold, it may be configured to generate an alert. The alert may inform the user or owner of the vehicle that it should be brought in for repair. Registered engineers may also be able to access the sensor data (or a different subset of the sensor data) in order to aid them with repair. This can ensure that only registered or authorized engineers are able to perform repairs on the vehicle in question.
- **Control.** The present invention may be used to enable advanced driver assistance systems (ADAS) or autonomous functionality of the vehicle. Here, the term "autopilot" should be understood to correspond to any automatic control of the vehicle, and not necessarily just an aeroplane. This function may be achieved similarly to the refrigeration control discussed with respect to the container. The sensors may be configured to detect various parameters relevant to the control of the vehicle, for example proximity to other vehicles or obstacles, location (e.g. the position of a car on a map, the position of an aeroplane relative to a runway, the position of the hull of a ship relative to features on the seafloor), altitude, depth, speed/velocity, orientation of the vehicle. The control unit may then, based on these parameters, be configured to determine or vary the value of one or more operating parameters. This functionality could be used, for example, for automated landing of an aeroplane, parking of a car or train, or mooring of a ship. The present invention is advantageous here, because it is able to ensure that unauthorized devices are unable to access the sensor data, which, clearly, could have disastrous consequences.

Similar to the smart vehicle use case, the present invention may also be applicable to industrial control systems, in both the monitoring and control contexts. In other words, the system 1000 may be an industrial control system. The monitoring context, the system may work very similarly to the case for the smart vehicle. In the case of industrial control, the parameters which are measured by the sensors may be different. For example, they may be configured to measure environmental conditions, such as temperature, pressure, humidity/moisture level, pH, concentrations or partial pressures of certain substances. Additional conditions may include various electrical properties (e.g. current, voltage, power, electric field strength/flux density, magnetic field strength/flux density, charge, resistance, inductance, capacitance, conductivity/conductance, resistivity/resistance), thermal conductivity, and any other parameters which may give an indication as to the progress of an industrial process. In addition, it is also envisaged that "wear and tear" sensors also be employed, in order to monitor the health of industrial components. As before, a control unit may be configured to vary one or more operating parameters based on the sensor data.

Another scenario in which the present invention may be used is in a hospital.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A method, performed by a sensor (10), of controlling access to sensor data, the method including the steps of:
generating (S1) sensor data, and protecting (S2) the sensor data to generate protected sensor data; and
transmitting (S3) the protected sensor data to a device (20) for storage;
**characterized in that:**
the method further comprises:
receiving (S4), from the device (20) an authorization token (23) including access control data defining one or more operations which the device is permitted to execute on the protected sensor data (24);
determining (S9), based on the access control data, an operation which the device (20) is permitted to execute on the protected sensor data (24);
providing (S10), to the device (20), one or more keys usable by the device to execute the operation on the protected sensor data (24).

2. The method of claim 1, wherein:
protecting sensor data comprises protecting the sensor data using a secret key.

3. The method of claim 1 or claim 2, wherein:
the method further includes deleting the sensor data and/or the protected sensor data after the step of transmitting it to the device.

4. The method of any one of claims 1 to 3, wherein:
protecting the sensor data includes:
applying a first secret key to the sensor data, to generate the protected sensor data; and
if the access control data defines that the device is permitted execute a first operation on the protected sensor data, the step of providing includes:
providing, to the device, a first complementary key, usable by the device to execute the first operation, the first complementary key being complementary to the first secret key.

5. The method of claim 4, wherein:
the first secret key is an encryption key;
the first protected sensor data is encrypted sensor data;
the first operation is a decryption or reading operations;
the step of providing includes:
providing a complementary key in the form of a decryption key to the device.

6. The method of claim 5, wherein:
protecting the sensor data includes:
applying a second secret key to the first protected sensor data, to generate second protected sensor data; and
(i) if the access control data defines that the device is permitted to execute a second operation on the second protected data, the step of providing includes:
providing, to the device, a second complementary key, usable by the device to execute the second operation on the second protected sensor data; or
(ii) if the access control data defines that the device is permitted to execute both the first and second operation, the step of providing includes:
providing, to the device, the first complementary key and the second complementary key, the second complementary key usable by the device to execute the second operation on the second protected sensor data to retrieve the first protected sensor data, and then the first complementary key usable by the device to execute the first operation on the first protected sensor data
(iii) if the access control data defines that the device is permitted to execute a third operation on the second protected data, the step of providing includes:
providing, to the device, the first complementary key and the second complementary key, the first complementary key and the second complementary key usable in combination to execute the third operation on the second protected sensor data.

7. A method according to claim 6, wherein:
the first secret key is a first authentication key;
the second secret key is an encryption key;
the step of protecting the sensor data includes:
applying the first authentication key to the sensor data to generate an authentication code, the first protected sensor data being a combination of the sensor data and the authentication code;
applying the encryption key to the first protected sensor data, to generate encrypted sensor data.

8. A method according to claim 6, wherein:
if the access control data defines that the device is permitted to decrypt the encrypted sensor data, the step of providing includes providing to the device, a decryption key usable by the device to decrypt the encrypted sensor data; and
if the access control data defines that the device is permitted decrypt and re-authenticate the encrypted sensor data, or to modify the sensor data, the step of providing includes providing, to the device, the first authentication key and the decryption key, the decryption key usable by the device to decrypt the encrypted sensor data, to retrieve the combination of the sensor data and the authentication code, thereby enabling the device to modify the sensor data, to generate modified sensor data, and the first authentication key usable by the device on the modified sensor data to generate a second authentication code.

9. The method of any one of claims 1 to 8, wherein:
the sensor data includes a first subset of sensor data, and a second subset of sensor data;
the step of protecting the sensor data includes:
protecting the first subset of sensor data to generate a first subset of protected sensor data; and
protecting the second subset of sensor data to generate a second subset of protected sensor data;
the access control data defines:
a first operation which the device is permitted to execute on the first subset of protected sensor data; and/or
a second operation which the device is permitted to execute on the second subset of protected sensor data;
the step of determining includes determining, based on the access control data:
a first operation which the device is permitted to execute on the first subset of protected sensor data; and/or
a second operation which the device is permitted to execute on the second subset of protected data; and
the step of providing includes:
only if it is determined that the device is permitted to execute the first operation, providing one or more keys usable by the device to execute the first operation on the first subset the protected sensor data; and
only if it is determined that the device is permitted to execute the second operation, providing one or more keys usable by the device to execute the second operation on the second subset of protected sensor data.

10. A method of accessing protected sensor data by a device (20), the method including the steps of:
receiving (S4) protected sensor data (24) from a sensor (10) ;
storing (S5) the received protected sensor data (24);
**characterized in that:**
the device (20) has stored thereon an authorization token (23) including access control data defining one or more operations which the device (20) is permitted to execute on protected sensor data (24); and
the method further comprises:
sending (S7) the authorization token to the sensor (10); and
receiving (S11), from the sensor (10), one or more keys usable by the device (20) to execute a permitted operation on the protected sensor data (24).

11. The method of claim 10, further including:
sending an access request to the sensor, the access request specifying a requested operation to be executed on the protected sensor data.

12. The method of claim 10 or claim 11, wherein:
the protected sensor data includes a first subset of protected sensor data, and a second subset of protected sensor data;
the access control data defines: a first operation which the device is permitted to execute on the first subset of protected sensor data; and/or a second operation which the device is permitted to execute on the second subset of protected sensor data;
the step of receiving includes:
only if it is defined in the access control data that the device is permitted to execute the first operation, receiving one or more keys usable by the device to execute the first operation on the first subset of the protected sensor data; and
only if it is defined in the access control data that the device is permitted to execute the second operation, receiving one or more keys usable by the device to execute the second operation on the second subset of the protected sensor data.

13. The method of claim 12, including:
sending an access request to the sensor, the access request specifying one or more of: the first operation to be executed on the first subset of encrypted sensor data, and the second operation to be executed on the second subset of encrypted sensor data.

14. The method of any one of claims 10 to 13, wherein:
the authorization token defines one or more validity conditions in the form of a condition which must be met in order for the authorization token to be valid, the validity conditions including one or more of:
a restriction on the time period or time periods for which the authorization token is valid;
a restriction on the number of times that the authorization token may be used;
a restriction on a user credential or set of user credentials which may be used in association with the authorization token; and
a restriction on a device which sends the authorization token.

15. A sensor (10) configured to generate sensor data, and to control access to the sensor data, the sensor (10) configured to perform the method of any one of claims 1 to 9.

16. A device (20) for processing protected sensor data (24), the device (20) configured to perform the method of any one of claims 10 to 14.

## Patentansprüche

1. Durch einen Sensor (10) durchgeführtes Verfahren des Steuerns von Zugriff auf Sensordaten, wobei das Verfahren folgende Schritte umfasst:
Erzeugen (S1) von Sensordaten und Schützen (S2) der Sensordaten, um geschützte Sensordaten zu erzeugen; und
Übertragen (S3) der geschützten Sensordaten an eine Vorrichtung (20) zur Speicherung;
**dadurch gekennzeichnet, dass**:
das Verfahren ferner Folgendes umfasst:
Empfangen (S4) eines Autorisierungstokens (23) von der Vorrichtung (20), umfassend Zugriffssteuerungsdaten, die einen oder mehrere Vorgänge definieren, welche die Vorrichtung an den geschützten Sensordaten (24) ausführen darf;
Bestimmen (S9) eines Vorgangs, den die Vorrichtung (20) an den geschützten Sensordaten (24) durchführen darf, beruhend auf den Zugriffssteuerungsdaten;
Bereitstellen (S10) von einem oder mehreren Schlüsseln, die von der Vorrichtung verwendbar sind, um den Vorgang an den geschützten Sensordaten (24) auszuführen, für die Vorrichtung (20).

2. Verfahren nach Anspruch 1, wobei:
das Schützen der Sensordaten das Schützen der Sensordaten unter Verwendung eines Geheimschlüssels umfasst.

3. Verfahren nach Anspruch 1 oder 2, wobei:
das Verfahren ferner das Löschen der Sensordaten und/oder der geschützten Sensordaten nach dem Schritt des Übertragens derselben an die Vorrichtung umfasst.

4. Verfahren nach einem der Ansprüche 1 bis 3, wobei:
das Schützen der Sensordaten Folgendes umfasst:
Anwenden eines ersten Geheimschlüssels auf die Sensordaten, um die geschützten Sensordaten zu erzeugen; und
wobei, wenn die Zugriffssteuerungsdaten definieren, dass die Vorrichtung einen ersten Vorgang an den geschützten Sensordaten ausführen darf, der Schritt des Bereitstellens Folgendes umfasst:
Bereitstellen für die Vorrichtung eines ersten komplementären Schlüssels, der von der Vorrichtung verwendbar ist, um den ersten Vorgang auszuführen, wobei der erste komplementäre Schlüssel komplementär zum ersten Geheimschlüssel ist.

5. Verfahren nach Anspruch 4, wobei:
der erste Geheimschlüssel ein Verschlüsselungsschlüssel ist;
die ersten geschützten Sensordaten verschlüsselte Sensordaten sind;
der erste Vorgang ein Entschlüsselungs- oder Lesevorgang ist;
wobei der Schritt des Bereitstellens Folgendes umfasst:
Bereitstellen eines komplementären Schlüssels in Form eines Entschlüsselungsschlüssels für die Vorrichtung.

6. Verfahren nach Anspruch 5, wobei:
das Schützen der Sensordaten Folgendes umfasst:
Anwenden eines zweiten Geheimschlüssels auf die ersten geschützten Sensordaten, um zweite geschützte Sensordaten zu erzeugen; und
(i) wobei, wenn die Zugriffssteuerungsdaten definieren, dass die Vorrichtung einen zweiten Vorgang an den zweiten geschützten Daten ausführen darf, der Schritt des Bereitstellens Folgendes umfasst:
Bereitstellen eines zweiten komplementären Schlüssels, der von der Vorrichtung verwendbar ist, um den zweiten Vorgang an den zweiten geschützten Sensordaten auszuführen, für die Vorrichtung; oder
(ii) wobei, wenn die Zugriffssteuerungsdaten definieren, dass die Vorrichtung sowohl den ersten als auch den zweiten Vorgang ausführen darf, der Schritt des Bereitstellens Folgendes umfasst:
Bereitstellen des ersten komplementären Schlüssels und des zweiten komplementären Schlüssels für die Vorrichtung, wobei der zweite komplementäre Schlüssel von der Vorrichtung verwendbar ist, den zweiten Vorgang an den zweiten geschützten Sensordaten auszuführen, um die ersten geschützten Sensordaten abzurufen, und anschließend des ersten komplementären Schlüssels, der von der Vorrichtung verwendbar ist, um den ersten Vorgang an den ersten geschützten Sensordaten auszuführen,
(iii) wobei, wenn die Zugriffssteuerungsdaten definieren, dass die Vorrichtung einen dritten Vorgang an den zweiten geschützten Daten ausführen darf, der Schritt des Bereitstellens Folgendes umfasst:
Bereitstellen des ersten komplementären Schlüssels und des zweiten komplementären Schlüssels für die Vorrichtung, wobei der erste komplementäre Schlüssel und der zweite komplementäre Schlüssel kombiniert verwendbar sind, um den dritten Vorgang an den zweiten geschützten Sensordaten auszuführen.

7. Verfahren nach Anspruch 6, wobei:
der erste Geheimschlüssel ein erster Authentifizierungsschlüssel ist;
der zweite Geheimschlüssel ein Verschlüsselungsschlüssel ist;
der Schritt des Schützens der Sensordaten Folgendes umfasst:
Anwenden des ersten Authentifizierungsschlüssels auf die Sensordaten, um einen Authentifizierungscode zu erzeugen, wobei die ersten geschützten Sensordaten eine Kombination der Sensordaten und des Authentifizierungscodes sind;
Anwenden des Verschlüsselungsschlüssels auf die ersten geschützten Sensordaten, um verschlüsselte Sensordaten zu erzeugen.

8. Verfahren nach Anspruch 6, wobei:
wenn die Zugriffssteuerungsdaten definieren, dass die Vorrichtung die verschlüsselten Sensordaten entschlüsseln darf, der Schritt des Bereitstellens das Bereitstellen eines Verschlüsselungsschlüssels für die Vorrichtung umfasst, der von der Vorrichtung verwendbar ist, um die verschlüsselten Sensordaten zu entschlüsseln; und
wenn die Zugriffssteuerungsdaten definieren, dass die Vorrichtung die verschlüsselten Sensordaten entschlüsseln und erneut authentifizieren oder die Sensordaten modifizieren darf, der Schritt des Bereitstellens das Bereitstellen des ersten Authentifizierungsschlüssels und des Entschlüsselungsschlüssels für die Vorrichtung, wobei der Entschlüsselungsschlüssel von der Vorrichtung verwendbar ist, um die verschlüsselten Sensordaten zu entschlüsseln, um die Kombination der Sensordaten und des Authentifizierungscodes abzurufen, was es der Vorrichtung ermöglicht, die Sensordaten zu modifizieren, um modifizierte Sensordaten zu erzeugen, und des ersten Authentifizierungsschlüssels umfasst, der von der Vorrichtung an den modifizierten Sensordaten verwendbar ist, um einen zweiten Authentifizierungscode zu erzeugen.

9. Verfahren nach einem der Ansprüche 1 bis 8, wobei:
die Sensordaten einen ersten Teilsatz von Sensordaten und einen zweiten Teilsatz von Sensordaten umfassen;
wobei der Schritt des Schützens der Sensordaten Folgendes umfasst:
Schützen des ersten Teilsatzes von Sensordaten, um einen ersten Teilsatz von geschützten Sensordaten zu erzeugen; und
Schützen des zweiten Teilsatzes von Sensordaten, um einen zweiten Teilsatz von geschützten Sensordaten zu erzeugen;
wobei die Zugriffssteuerungsdaten Folgendes definieren:
einen ersten Vorgang, den die Vorrichtung am ersten Teilsatz von geschützten Sensordaten ausführen darf; und/oder
einen zweiten Vorgang, den die Vorrichtung am zweiten Teilsatz von geschützten Sensordaten ausführen darf;
wobei der Schritt des Bestimmens das Bestimmen, beruhend auf den Zugriffssteuerungsdaten, von Folgendem umfasst:
einem ersten Vorgang, den die Vorrichtung am ersten Teilsatz von geschützten Sensordaten ausführen darf; und/oder
einem zweiten Vorgang, den die Vorrichtung am zweiten Teilsatz von geschützten Sensordaten ausführen darf; und
wobei der Schritt des Bereitstellens Folgendes umfasst:
nur, wenn bestimmt wird, dass die Vorrichtung den ersten Vorgang ausführen darf, Bereitstellen von einem oder mehreren Schlüsseln, die von der Vorrichtung verwendbar sind, um den ersten Vorgang am ersten Teilsatz der geschützten Sensordaten auszuführen; und
nur, wenn bestimmt wird, dass die Vorrichtung den zweiten Vorgang ausführen darf, Bereitstellen von einem oder mehreren Schlüsseln, die von der Vorrichtung verwendbar sind, um den zweiten Vorgang am zweiten Teilsatz der geschützten Sensordaten auszuführen.

10. Verfahren des Zugreifens auf geschützte Sensordaten durch eine Vorrichtung (20), wobei das Verfahren folgende Schritte umfasst:
Empfangen (S4) von geschützten Sensordaten (24) von einem Sensor (10);
Speichern (S5) der empfangenen geschützten Sensordaten (24);
**dadurch gekennzeichnet, dass**
die Vorrichtung (20) auf dieser einen Autorisierungstoken (23) gespeichert hat, umfassend Zugriffssteuerungsdaten, die einen oder mehrere Vorgänge definieren, welche die Vorrichtung (20) an den geschützten Sensordaten (24) ausführen darf; und
wobei das Verfahren ferner Folgendes umfasst:
Senden (S7) des Autorisierungstokens an den Sensor (10); und
Empfangen (S11) von einem oder mehreren Schlüsseln vom Sensor (10), die durch die Vorrichtung (20) verwendbar sind, um einen erlaubten Vorgang an den geschützten Sensordaten (24) auszuführen.

11. Verfahren nach Anspruch 10, ferner umfassend:
Senden einer Zugriffsanfrage an den Sensor, wobei die Zugriffsanfrage einen angeforderten Vorgang spezifiziert, der an den geschützten Sensordaten auszuführen ist.

12. Verfahren nach Anspruch 10 oder Anspruch 11, wobei:
die geschützten Sensordaten einen ersten Teilsatz von geschützten Sensordaten und einen zweiten Teilsatz von geschützten Sensordaten umfassen;
die Zugriffssteuerungsdaten Folgendes definieren: einen ersten Vorgang, den die Vorrichtung am ersten Teilsatz von geschützten Sensordaten ausführen darf; und/oder einen zweiten Vorgang, den die Vorrichtung am zweiten Teilsatz von geschützten Sensordaten ausführen darf;
wobei der Schritt des Empfangens Folgendes umfasst:
nur, wenn in den Zugriffssteuerungsdaten definiert ist, dass die Vorrichtung den ersten Vorgang ausführen darf, Empfangen von einem oder mehreren Schlüsseln, die von der Vorrichtung ausführbar sind, um den ersten Vorgang am ersten Teilsatz von geschützten Sensordaten auszuführen; und
nur, wenn in den Zugriffssteuerungsdaten definiert ist, dass die Vorrichtung den zweiten Vorgang ausführen darf, Empfangen von einem oder mehreren Schlüsseln, die von der Vorrichtung ausführbar sind, um den zweiten Vorgang am zweiten Teilsatz von geschützten Sensordaten auszuführen.

13. Verfahren nach Anspruch 12, umfassend:
Senden einer Zugriffsanfrage an den Sensor, wobei die Zugriffsanfrage eines oder mehrere aus folgenden spezifiziert; den ersten Vorgang, der am ersten Teilsatz von verschlüsselten Sensordaten auszuführen ist, und den zweiten Vorgang, der am zweiten Teilsatz von verschlüsselten Sensordaten auszuführen ist.

14. Verfahren nach einem der Ansprüche 10 bis 13, wobei:
der Autorisierungstoken eine oder mehrere Gültigkeitsbedingungen in Form einer Bedingung definiert, die erfüllt werden muss, damit der Autorisierungstoken gültig ist, wobei die Gültigkeitsbedingungen eine oder mehrere aus folgenden umfassen:
eine Beschränkung des Zeitraums oder der Zeiträume, für den/die der Autorisierungstoken gültig ist;
eine Beschränkung der Anzahl von Malen, die der Autorisierungstoken verwendet werden kann;
eine Beschränkung einer Benutzerberechtigung oder eines Satzes von Benutzerberechtigungen, der/die in Verbindung mit dem Autorisierungstoken verwendet werden kann/können; und
eine Beschränkung einer Vorrichtung, die den Autorisierungstoken sendet.

15. Sensor (10), der dazu ausgelegt ist, Sensordaten zu erzeugen und den Zugriff auf die Sensordaten zu steuern, wobei der Sensor (10) konfiguriert ist, um ein Verfahren nach einem der Ansprüche 1 bis 9 durchzuführen.

16. Vorrichtung (20) zum Verarbeiten von geschützten Sensordaten (24), wobei die Vorrichtung (20) dazu ausgelegt ist, ein Verfahren nach einem der Ansprüche 10 bis 14 durchzuführen.

## Revendications

1. Procédé, mis en oeuvre par un capteur (10), de contrôle d'accès à des données de capteur, le procédé incluant les étapes comprenant le fait de :
générer (S1) des données de capteur, et protéger (S2) les données de capteur en vue de générer des données de capteur protégées ; et
transmettre (S3) les données de capteur protégées à un dispositif (20) en vue d'un stockage ;
**caractérisé en ce que :**
le procédé comprend en outre le fait de :
recevoir (S4), en provenance du dispositif (20), un jeton d'autorisation (23) incluant des données de contrôle d'accès définissant une ou plusieurs opérations que le dispositif est autorisé à exécuter sur les données de capteur protégées (24) ;
déterminer (S9), sur la base des données de contrôle d'accès, une opération que le dispositif (20) est autorisé à exécuter sur les données de capteur protégées (24) ; et
fournir (S10), au dispositif (20), une ou plusieurs clés pouvant être utilisées par le dispositif pour exécuter l'opération sur les données de capteur protégées (24).

2. Procédé selon la revendication 1, dans lequel :
la protection des données de capteur comprend le fait de protéger les données de capteur à l'aide d'une clé secrète.

3. Procédé selon la revendication 1 ou 2, dans lequel :
le procédé inclut en outre le fait de supprimer les données de capteur et/ou les données de capteur protégées après l'étape de transmission de ces données au dispositif.

4. Procédé selon l'une quelconque des revendications 1 à 3, dans lequel :
la protection des données de capteur inclut le fait de :
appliquer une première clé secrète aux données de capteur, en vue de générer les données de capteur protégées ; et
si les données de contrôle d'accès définissent que le dispositif est autorisé à exécuter une première opération sur les données de capteur protégées, l'étape de fourniture inclut le fait de :
fournir, au dispositif, une première clé complémentaire, pouvant être utilisée par le dispositif pour exécuter la première opération, la première clé complémentaire étant complémentaire de la première clé secrète.

5. Procédé selon la revendication 4, dans lequel :
la première clé secrète est une clé de chiffrement ;
les premières données de capteur protégées sont des données de capteur chiffrées ;
la première opération est une opération de déchiffrement ou une opération de lecture ;
l'étape de fourniture inclut le fait de :
fournir une clé complémentaire, sous la forme d'une clé de déchiffrement, au dispositif.

6. Procédé selon la revendication 5, dans lequel :
la protection des données de capteur inclut le fait de :
appliquer une deuxième clé secrète aux premières données de capteur protégées, en vue de générer des deuxièmes données de capteur protégées ; et
(i) si les données de contrôle d'accès définissent que le dispositif est autorisé à exécuter une deuxième opération sur les deuxièmes données de capteur protégées, l'étape de fourniture inclut le fait de :
fournir, au dispositif, une deuxième clé complémentaire, pouvant être utilisée par le dispositif pour exécuter la deuxième opération sur les deuxièmes données de capteur protégées ; ou
(ii) si les données de contrôle d'accès définissent que le dispositif est autorisé à exécuter à la fois la première opération et la deuxième opération, l'étape de fourniture inclut le fait de :
fournir, au dispositif, la première clé complémentaire et la deuxième clé complémentaire, la deuxième clé complémentaire pouvant être utilisée par le dispositif pour exécuter la deuxième opération sur les deuxièmes données de capteur protégées afin de récupérer les premières données de capteur protégées, et ensuite la première clé complémentaire pouvant être utilisée par le dispositif pour exécuter la première opération sur les premières données de capteur protégées ;
(iii) si les données de contrôle d'accès définissent que le dispositif est autorisé à exécuter une troisième opération sur les deuxièmes données de capteur protégées, l'étape de fourniture inclut le fait de :
fournir, au dispositif, la première clé complémentaire et la deuxième clé complémentaire, la première clé complémentaire et la deuxième clé complémentaire pouvant être utilisées en combinaison pour exécuter la troisième opération sur les deuxièmes données de capteur protégées.

7. Procédé selon la revendication 6, dans lequel :
la première clé secrète est une première clé d'authentification ;
la deuxième clé secrète est une clé de chiffrement ;
l'étape de protection des données de capteur inclut le fait de :
appliquer la première clé d'authentification aux données de capteur en vue de générer un code d'authentification, les premières données de capteur protégées étant une combinaison des données de capteur et du code d'authentification ;
appliquer la clé de chiffrement aux premières données de capteur protégées, en vue de générer des données de capteur chiffrées.

8. Procédé selon la revendication 6, dans lequel :
si les données de contrôle d'accès définissent que le dispositif est autorisé à déchiffrer les données de capteur chiffrées, l'étape de fourniture inclut le fait de fournir, au dispositif, une clé de déchiffrement pouvant être utilisée par le dispositif en vue de déchiffrer les données de capteur chiffrées ; et
si les données de contrôle d'accès définissent que le dispositif est autorisé à déchiffrer et à réauthentifier les données de capteur chiffrées, ou à modifier les données de capteur, l'étape de fourniture inclut le fait de fournir, au dispositif, la première clé d'authentification et la clé de déchiffrement, la clé de déchiffrement pouvant être utilisée par le dispositif en vue de déchiffrer les données de capteur chiffrées, afin de récupérer la combinaison des données de capteur et du code d'authentification, ce qui permet par conséquent au dispositif de modifier les données de capteur, en vue de générer des données de capteur modifiées, et la première clé d'authentification pouvant être utilisée par le dispositif sur les données de capteur modifiées afin de générer un deuxième code d'authentification.

9. Procédé selon l'une quelconque des revendications 1 à 8, dans lequel :
les données de capteur incluent un premier sous-ensemble de données de capteur et un deuxième sous-ensemble de données de capteur ;
l'étape de protection des données de capteur inclut le fait de :
protéger le premier sous-ensemble de données de capteur en vue de générer un premier sous-ensemble de données de capteur protégées ; et
protéger le deuxième sous-ensemble de données de capteur en vue de générer un deuxième sous-ensemble de données de capteur protégées ;
les données de contrôle d'accès définissent :
une première opération que le dispositif est autorisé à exécuter sur le premier sous-ensemble de données de capteur protégées ; et/ou
une deuxième opération que le dispositif est autorisé à exécuter sur le deuxième sous-ensemble de données de capteur protégées ;
l'étape de détermination inclut le fait de déterminer, sur la base des données de contrôle d'accès :
une première opération que le dispositif est autorisé à exécuter sur le premier sous-ensemble de données de capteur protégées ; et/ou
une deuxième opération que le dispositif est autorisé à exécuter sur le deuxième sous-ensemble de données de capteur protégées ; et
l'étape de fourniture inclut le fait de :
uniquement s'il est déterminé que le dispositif est autorisé à exécuter la première opération, fournir une ou plusieurs clés pouvant être utilisées par le dispositif pour exécuter la première opération sur le premier sous-ensemble de données de capteur protégées ; et
uniquement s'il est déterminé que le dispositif est autorisé à exécuter la deuxième opération, fournir une ou plusieurs clés pouvant être utilisées par le dispositif pour exécuter la deuxième opération sur le deuxième sous-ensemble de données de capteur protégées.

10. Procédé d'accès à des données de capteur protégées par le biais d'un dispositif (20), le procédé incluant les étapes comprenant le fait de :
recevoir (S4) des données de capteur protégées (24) en provenance d'un capteur (10) ;
stocker (S5) les données de capteur protégées reçues (24) ;
**caractérisé en ce que :**
sur le dispositif (20), est stocké un jeton d'autorisation (23) incluant des données de contrôle d'accès définissant une ou plusieurs opérations que le dispositif (20) est autorisé à exécuter sur des données de capteur protégées (24) ; et
le procédé comprend en outre le fait de :
envoyer (S7) le jeton d'autorisation au capteur (10) ; et
recevoir (S11), en provenance du capteur (10), une ou plusieurs clés pouvant être utilisées par le dispositif (20) pour exécuter une opération autorisée sur les données de capteur protégées (24).

11. Procédé selon la revendication 10, incluant en outre le fait de :
envoyer une demande d'accès au capteur, la demande d'accès spécifiant une opération demandée devant être exécutée sur les données de capteur protégées.

12. Procédé selon la revendication 10 ou 11, dans lequel :
les données de capteur protégées incluent un premier sous-ensemble de données de capteur protégées et un deuxième sous-ensemble de données de capteur protégées ;
les données de contrôle d'accès définissent : une première opération que le dispositif est autorisé à exécuter sur le premier sous-ensemble de données de capteur protégées ; et/ou une deuxième opération que le dispositif est autorisé à exécuter sur le deuxième sous-ensemble de données de capteur protégées ;
l'étape de réception inclut le fait de :
uniquement s'il est défini dans les données de contrôle d'accès que le dispositif est autorisé à exécuter la première opération, recevoir une ou plusieurs clés pouvant être utilisées par le dispositif pour exécuter la première opération sur le premier sous-ensemble de données de capteur protégées ; et
uniquement s'il est défini dans les données de contrôle d'accès que le dispositif est autorisé à exécuter la deuxième opération, recevoir une ou plusieurs clés pouvant être utilisées par le dispositif pour exécuter la deuxième opération sur le deuxième sous-ensemble de données de capteur protégées.

13. Procédé selon la revendication 12, incluant le fait de :
envoyer une demande d'accès au capteur, la demande d'accès spécifiant une ou plusieurs parmi : la première opération devant être exécutée sur le premier sous-ensemble de données de capteur chiffrées, et la deuxième opération devant être exécutée sur le deuxième sous-ensemble de données de capteur chiffrées.

14. Procédé selon l'une quelconque des revendications 10 à 13, dans lequel :
le jeton d'autorisation définit une ou plusieurs conditions de validité sous la forme d'une condition qui doit être satisfaite afin que le jeton d'autorisation soit valide, les conditions de validité incluant une ou plusieurs des restrictions parmi :
une restriction concernant la période de temps ou les périodes de temps pour laquelle/lesquelles le jeton d'autorisation est valide ;
une restriction concernant le nombre d'utilisations possibles du jeton d'autorisation ;
une restriction concernant un justificatif d'identité d'utilisateur ou un ensemble de justificatifs d'identité d'utilisateur pouvant être utilisé en association avec le jeton d'autorisation ; et
une restriction concernant un dispositif qui envoie le jeton d'autorisation.

15. Capteur (10) configuré de manière à générer des données de capteur, et à contrôler l'accès aux données de capteur, le capteur (10) étant configuré de manière à mettre en oeuvre le procédé selon l'une quelconque des revendications 1 à 9.

16. Dispositif (20) destiné à traiter des données de capteur protégées (24), le dispositif (20) étant configuré de manière à mettre en oeuvre le procédé selon l'une quelconque des revendications 10 à 14.
